(19) **Europäisches Patentamt**
**European Patent Office**
**Office européen des brevets**

(11) **EP 2 051 319 A2**

(12) **EUROPEAN PATENT APPLICATION**

(43) Date of publication:
**22.04.2009 Bulletin 2009/17**

(51) Int Cl.:
*H01M 4/50* (2006.01)     *H01M 4/52* (2006.01)
*H01M 4/62* (2006.01)     *H01M 10/40* (2006.01)
*C01D 15/02* (2006.01)    *C01G 45/00* (2006.01)
*C01G 51/00* (2006.01)    *C01G 53/00* (2006.01)

(21) Application number: **08018269.4**

(22) Date of filing: **17.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **17.10.2007 JP 2007270551**
**19.03.2008 JP 2008070554**

(71) Applicant: **HITACHI VEHICLE ENERGY, LTD.**
**Hitachinaka-shi**
**Ibaraki 312-0061 (JP)**

(72) Inventors:
• **Yuasa, Toyotaka**
**Tokyo 100-8220 (JP)**
• **Kobayasi, Mituru**
**Tokyo 100-8220 (JP)**
• **Ogawa, Sai**
**Tokyo 100-8220 (JP)**

(74) Representative: **Beetz & Partner**
**Patentanwälte**
**Steinsdorfstrasse 10**
**80538 München (DE)**

(54) **Cathode active material and lithium ion secondary battery containing the same**

(57) Disclosed herein are a cathode material for a lithium secondary battery capable of attaining high power and high capacitance simultaneously, and a lithium secondary battery using the same.

A cathode material for a lithium secondary battery in which a primary particle 1 constituting a secondary particle 2 of a cathode active material comprises a particle mainly having a particle size of more than 0.1 μm and less than 0.5 μm, a specific surface area of the secondary particle is 1.1 m²/g or more and 1.6 m²/g or less, and the narrowest diameter for through pores of the secondary particle 2 as measured by a Perm Porometry is more than 0.1 μm and less than 0.3 μm.

FIG. 2

**Description**

BACKGROUND OF THE INVENTION

1. Field of the Invention

The present invention relates to a cathode active material for a lithium secondary battery and a lithium ion secondary battery using the same. The invention particularly relates to a cathode active material for a large lithium secondary battery using a non-aqueous electrolyte and a lithium ion secondary battery using the same.

2. Description of the Related Art

A battery of high power and high energy is demanded for a power source for a hybrid car capable of efficiently utilizing energy. Since a lithium secondary battery has high battery voltage, decreased weight, and high energy density, it is prospective as a battery for a hybrid car. For the secondary battery for the hybrid car, a high rate discharge is demanded to assist acceleration after regenerating the energy and storing it in a battery during deceleration of the car. In the application to the hybrid car, since an intended speed is attained by acceleration for 10 sec, excellent output characteristics for 10 sec are required as battery characteristics. Further, the development of a plug-in hybrid car also has been expected in recent years along with the growing concern about environmental problems. The plug-in hybrid car can be charged also from a domestic power source or the like and has a feature of an electric car and a hybrid car in combination. As the secondary battery characteristics required for the plug-in hybrid car, higher battery capacitance having an effect on the cruising distance of the car has been demanded along with high power demanded for existent hybrid car. Further, high capacitance as well as high power is demanded also for the secondary battery as equipment for tools.

Generally, for increase of the power, the particle size of an active material constituting the electrode is decreased and voids are formed in an electrode in order to increase the specific surface area of the electrode. However, for increase of the capacitance, it is important to increase the filling density per unit volume, and it is necessary to decrease the porosity in the electrode. Accordingly, high power and high capacitance conflict to each other and it has been demanded for the development of a technique capable of attaining them simultaneously.

The following study has been made for high power. For example, JP-A-2000-323123 discloses that the effect of improvement in load characteristics can be confirmed by forming the particle form of a cathode active material powder into a porous spherical secondary particle. Further, it describes that the movement and diffusion of an electrolyte in the pore can be facilitated to suppress increase of the internal resistance during high rate discharge by optimizing the average diameter of voids in a secondary particle, that is a pore that opens from the inside to the surface of a particle (open pore) to 0.1 to 1 $\mu$m (measured by mercury intrusion porosimetry). In view of the concept described above, JP-A-2000-323123 defines the pore distribution and the pore volume formed in the inside of the particle. Further, the spherical secondary particle has a plurality of open pores penetrating from the surface to the inside of the spherical secondary particle. However, it does not disclose the pore structure formed in the secondary particle and, further, it does not disclose the pore structure formed in the cathode, particularly, the pore structure penetrating from one surface to another surface of the secondary particle.

JP-A-2005-158401 discloses a method of manufacturing a cathode active material having a porous structure efficiently by using, for example, a thermoplastic resin as a pore-forming particle. In the pore formed by the manufacturing method, the peak value of the pore size distribution is within a range, preferably, from 0.03 to 1 $\mu$m as measured by mercury intrusion porosimetry. However, it does not disclose the penetrating pore structure formed in the cathode active material particle and the cathode.

JP-A-2005-123179 defines the pore size in the cathode active material and discloses an improvement for the coatability of the electrode and the low temperature characteristics. Generally, in the manufacture of a cathode of a lithium ion secondary battery, a slurry formed by kneading a cathode active material, a conduction material for improving the electron conductivity of the cathode, and a binder for binding them with an organic solvent is coated on an aluminum foil. When the cathode active material contains a great amount of voids inside thereof, it absorbs the binder and the organic solvent due to high liquid absorption to result in peeling of the electrode. As described above, JP-A-2005-123179 defines the average pore radius in the cathode active material and in the cathode as 10 nm or more and 100 nm or less by mercury intrusion porosimetry for solving the problem concerning the coatability such as peeling of the electrode and for improving low temperature characteristics. However, it does not discloses a through pore structure suitable for movement of materials in the cathode active material particle and in the cathode (to be described later).

Further, as has been described above, since an intended speed is reached by acceleration within 10 sec in the application to the hybrid car, characteristics necessary for the battery are excellent power characteristics for 10 sec. In the case of discharge, Li of the electrolyte contained in the liquid electrolyte has to be supplied to the cathode active material for 10 sec. Therefore, it is necessary that the liquid electrolyte is present in the voids or in the conduction material near the individual primary particles of the cathode active material.

Generally, to attain high power, the particle size of the active material constituting the electrode is decreased and voids are formed in the electrode for increasing the specific surface area of an electrode. However, when the particle size of the active material is decreased, it becomes difficult to form a conduction network for connecting individual active material particles and a collector.

Accordingly, the following investigation has been made on the structure of an electrode, the structure using a small particle size active material. For example, JP-A-2005-141983 discloses a lithium secondary battery capable of attaining high capacitance and excellent in rate characteristics and power characteristics by using an electrode comprising a cathode active material powder with a BET specific surface area of 1.6 $m^2$/g or more and a primary particle size of 0.1 $\mu$m or more and less than 0.5 $\mu$m in order to increase the specific surface area of the electrode. However, the document does not disclose the particle size of the conduction material suitable for the cathode active material of a small primary particle size.

Further, also JP-A-2002-104827 also discloses a lithium secondary battery capable of attaining high capacitance and excellent in the rate characteristics and the power characteristics by using an electrode comprising a spinel type lithium manganese cathode active material powder with a primary particle size of 0.01 $\mu$m or more and less than 0.2 $\mu$m. However, it does not disclose the particle size of the conduction material suitable for a cathode active material of small primary particle size.

On the other hand, JP-A-2005-251684 discloses a conduction material of small particle size and defines the range for the primary particle size and the secondary particle size constituting the cathode active material. However, it does disclose the cathode active material of a small secondary particle size comprising small primary particle size. The constitution of the cathode active material and the conduction material disclosed in the invention cannot constitute a conduction network in the electrode and cannot obtain power characteristics of a battery suitable for the hybrid car.

SUMMARY OF THE INVENTION

The present invention intends to provide a cathode active material for a lithium secondary battery capable of attaining high power and a lithium ion secondary battery using the same.

Further, the invention intends to provide a cathode active material for a lithium secondary battery capable of attaining high power and high capacitance simultaneously, as well as a lithium ion secondary battery using the same.

The present inventors have made an earnest study for solving the problem and, as a result, has devised a penetration type pore structure of the secondary particle of a cathode active material and have found that high power and high capacitance of a lithium secondary battery can be attained in that the pore structure is connected like a network shape in the cathode to accomplish the invention.

The present invention provides, in a first aspect, the followings.

(1) A cathode material for a lithium secondary battery in which a primary particle constituting a secondary particle of the cathode active material comprises a particle mainly having a particle size of more than 0.1 $\mu$m and less than 0.5 $\mu$m, a specific surface area of the secondary particle is 1.1 $m^2$/g or more and 1.6 $m^2$/g or less, and/or the narrowest diameter for through pores as measured by Perm Porometry is more than 0.1 $\mu$m and less than 0.3 $\mu$m.
(2) The cathode material according to (1) above,
wherein the ratio of the through pores distributed within a range of more than 0.1 $\mu$m and less than 0.3 $\mu$m described above present in the through pores distribution of 1 $\mu$m or less is more than 3%.
(3) The cathode material according to (1) or (2),
wherein the cathode active material is a layered composite oxide represented by the chemical formula:

$$Li_aMn_xNi_yCo_zO_2$$

(0 < a ≤ 1.2, 0.1 ≤ x ≤ 0.9, 0.1 ≤ y ≤ 0.9, 0.1 ≤ z ≤ 0.34, and x+y+z = 1).
(4) The cathode material according to any one of (1) to (3), wherein a hollow carbon material is further contained.
(5) A lithium ion secondary battery in which the cathode material according to any one of (1) to (4) is used.
(6) A battery module in which the lithium ion secondary batteries according to (5) are electrically connected in plurality.
(7) A method of producing the cathode material for the lithium secondary battery according to any one of (1) to (4), including the following steps of:

(a) mixing and pulverizing metal oxides as the starting material for a cathode active material, thereby manufacturing primary particles mainly having a particle size of more than 0.1 $\mu$m and less than 0.5 $\mu$m,
(b) adding a binder to the primary particles and granulating them,

(c) adding a lithium compound to the granulated particles,
(d) baking the particles after addition of the lithium compound in an atmospheric air at 850°C or lower, and
(e) crushing the baked particles thereby manufacturing a secondary particle.

(8) The method according to (7) further includes the step of, in the step (a), conducting pulverization such that the primary particles of a particle size of more than 0.1 $\mu$m and less than 0.5 $\mu$m are 98% by volume or more based on the metal oxide.
(9) The method according to (7) or (8) further includes the step of, in the step (b), adding a hollow carbon material together with the binder.
(10) A method of manufacturing a cathode material for a lithium secondary battery according to any one of (1) to (4), including the following steps of:

(a) adding a solution of a hydroxide to a solution of metal salts as the starting material for a cathode active material and manufacturing a particle in which primary particles of a metal composite hydroxide are aggregated by a coprecipitation method,
(b) adding a lithium compound to the particle in which the primary particles are aggregated.
(c) baking the particles after addition of the lithium compound in an atmospheric air at 50°C or lower, and
(d) crushing the baked particles thereby manufacturing secondary particles.

(11) The method according to (10) described above, which further includes the step of, in the step (a), preparing particles containing 98 vol% or more of primary particles with the particle size of more than 0.1 $\mu$m and less than 0.5 $\mu$m by a coprecipitation method.
(12) The method according to (10) or (11) further includes the step of, in the step (a), adding a hollow carbon material and a binder and granulating particles in which the primary particles are aggregated.
Then, the invention provides, in a second aspect, the followings.
(13) A cathode for use in a lithium secondary battery comprising a cathode active material having a secondary particle with the size of 3 $\mu$m or more and 6 $\mu$m or less in which primary particles of 0.1 $\mu$m or more and less than 0.3 $\mu$m are aggregated, and a lump conduction material with a particle size of 6 $\mu$m or less.
(14) The cathode described above wherein the pore volume within a range of the pore size of the cathode of 0.1 or more and 7 $\mu$m or less as measured by mercury intrusion porosimetry is 0.29 cm$^3$/g or more and less than 0.47 cm$^3$/g.
(15) The cathode described above wherein the cathode active material is a layered composite oxide represented by the chemical formula:

$$Li_aMn_xNi_yCo_zO_2$$

$(0 < a \leq 1.2, 0.1 \leq x \leq 0.9, 0.1 \leq y \leq 0.9, 0.1 \leq z \leq 0.34,$ and $x+y+z = 1)$.
(16) The cathode described above wherein the specific surface area of the cathode active material is 1.1 m$^2$/g or more and less than 1.5 m$^2$/g, and a hollow carbon material is further contained as a conduction material.
(17) A lithium secondary battery in which a cathode for occluding and releasing lithium and an anode for occluding and releasing lithium are formed by way of a liquid electrolyte, wherein the cathode contains a cathode active material and a conduction material, the cathode active material is a layered composite oxide having a secondary particle size of 3 $\mu$m or more and 6 $\mu$m or less in which primary particles of 0.1 $\mu$m or more and less than 0.3 $\mu$m are aggregated, and the layered composite oxide is represented by the chemical formula:

$$Li_aMn_xNi_yCo_zO_2$$

$(0 < a \leq 1.2, 0.1 \leq x \leq 0.9, 0.1 \leq y \leq 0.9, 0.1 \leq z \leq 0.34,$ and $x+y+z = 1)$.
the particle size of the conduction material is 6 $\mu$m or less, and the specific surface area of the cathode active material is 1.1 m$^2$/g or more and less than 1.5 m$^2$/g.
(18) A lithium secondary battery in which a cathode occluding and releasing lithium and an anode occluding and releasing lithium are formed by way of a liquid electrolyte,

wherein the cathode contains a cathode active material and a conduction material, the cathode active material is a layered composite oxide having a secondary particle size of 3 $\mu$m or more and 6 $\mu$m or less in which primary particles of 0.1 $\mu$m or more and less than 0.3 $\mu$m are aggregated, and the pore volume of the cathode within a range of the pore size of 0.1 or more and 7 $\mu$m or less as measured by mercury intrusion porosimetry is 0.29 cm$^3$/g or more and less than 0.47 cm$^3$/g.
The present invention can provide a lithium secondary battery suitable for the application use for equipments requiring high power and high capacitance such as secondary batteries for hybrid cars, plug-in hybrid cars, or tools.

BRIEF DESCRIPTION OF THE DRAWINGS

Other objects and advantages of the invention will become apparent from the following description of embodiments with reference to the accompanying drawings in which:

Fig. 1 shows a relation between a primary particle size and a thickness for a liquid electrolyte layer;
Fig. 2 shows a cross sectional structure of an existent cathode active material particle;
Fig. 3 shows a cross sectional structure of a cathode active material particle according to the invention;
Fig. 4 is a partially cut-away cross sectional view of a cylindrical lithium secondary battery according to the invention;
Fig. 5 shows a relation between cathode active material particles and conductive particles, which constitute an existent cathode;
Fig. 6 shows a relation between cathode active material particles and conductive particles, which constitute a cathode according to the invention; and

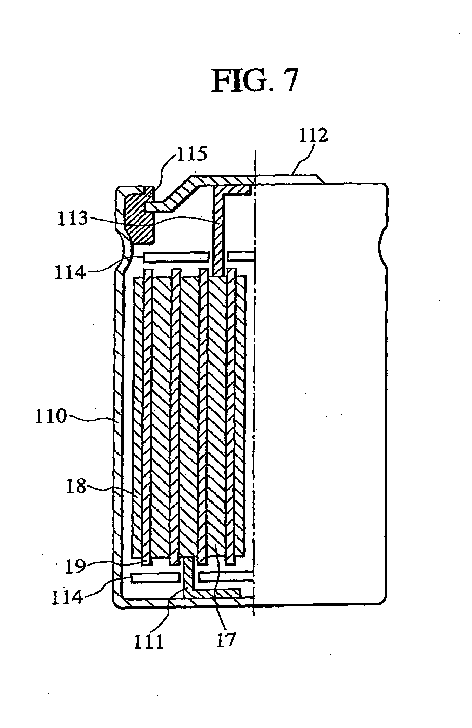

Fig. 7 is a partially cut-away cross sectional view of a cylindrical lithium secondary battery according to the invention.

DESCRIPTION OF THE PREFERRED EMBODIMENTS

A first aspect of the invention is to be described specifically.

(Cathode material for lithium secondary battery)

The cathode material for use in a lithium secondary battery according to the first aspect of the invention is a particle in which a particle size of a primary particle constituting a secondary particle of a cathode active material is more than 0.1 $\mu$m and less than 0.5 $\mu$m, the specific surface area of the secondary particle is 1.1 m$^2$/g or more and 1.6 m$^2$/g or less, and the narrowest diameter for the through pores of the secondary particle as measured by a Perm Porometry method is more than 0.1 $\mu$m and less than 0.3 $\mu$m as measured by the Perm Porometry.

The primary particle constituting the secondary particle is preferably a cathode active material comprising lithium, nickel, manganese, and cobalt (Li(NiMnCo)O$_2$ type). The particle size of the primary particle is mainly more than 0.1 $\mu$m and less than 0.5 $\mu$m, preferably, less than 0.4 $\mu$m and, more preferably, less than 0.3 $\mu$m. "Mainly" means herein that primary particles having a particle size of more than 0.1 $\mu$m and less than 0.5 $\mu$m, preferably, less than 0.4 $\mu$m and, more preferably, less than 0.3 $\mu$m are present by 95% by volume or more for the entire primary particles. When the particle size of the primary particle is 0.1 $\mu$m or less, it is difficult to prepare a secondary particle in which the primary particles are aggregated, and the filling density of a powder is lowered to decrease the energy density of the battery. Further, when it is 0.5 $\mu$m or more, since the primary particles constituting the secondary particle are large, the specific surface area of the secondary particle is lowered to decrease the battery power.

The secondary particle is granulated from the primary particles and the specific surface area thereof is 1.1 m$^2$/g or more and 1.6 m$^2$/g or less, preferably, 1.2 m$^2$/g or more and 1.4 m$^2$/g or less. When it is less than 1.1 m$^2$/g, the battery power is decreased because of the low specific surface area, whereas when it exceeds 1.6 m$^2$/g, the filling density of the powder is lowered to decrease the energy density of the battery.

Further, the secondary particle has a through pore. "Through pore" or "through type pore" referred to in the invention means a pore penetrating from a surface to another surface of the secondary particle. In the through pore of the secondary particle, the narrowest diameter is more than 0.1 $\mu$m and less than 0.3 $\mu$m as measured by the Perm Porometry. When it is 0.1 $\mu$m or less, since movement of the liquid electrolyte to the inside of the secondary particle is inhibited, the electrode resistance increases to decrease the battery power. When it is 0.3 $\mu$m or more, the filling density of the powder is lowered to decrease the energy density of the battery.

The through pores in the secondary particle enable high power and high capacitance of the lithium secondary battery by connection into a network shape in the cathode.

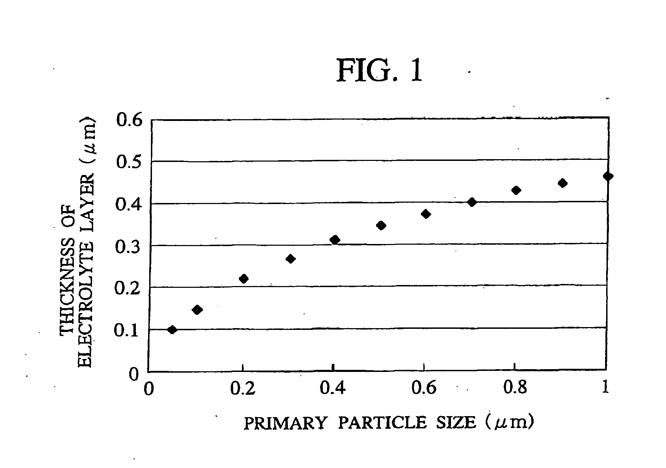

To attain high power and high capacitance simultaneously in the lithium secondary battery, it is first necessary to estimate void in the secondary particle, that is, pore size necessary for attaining high power within a desired discharge time. In the invention, the condition for moving the lithium ions most efficiently into the primary particles upon discharge for 10 sec is introduced, for example, as described below. First, an amount of a liquid electrolyte necessary for diffusion of lithium ions in one spherical primary particle was trially calculated by the following model. In a primary particle with a radius of R $\mu$m, the thickness for the liquid electrolyte layer containing lithium ions consumed by discharge for 10 sec was assumed as d $\mu$m. It was assumed here that lithium ions are occluded isotropically to a spherical primary particle. Parameters of a cathode used for trial calculation were assumed that the total specific surface area is 114.4 cm$^2$ calculated based on the specific surface area of the secondary particle and the amount of the cathode active material coated per unit area on the electrode, and the current applied is 22.6 mA/cm$^2$. Further, the parameters for the liquid electrolyte used for the trial calculation were assumed that the LiPF$_6$ concentration is 1 mol and the dissociation rate is 20% for the liquid electrolyte. Fig. 1 shows the result of the trially calculating of the necessary thickness d $\mu$m for the liquid electrolyte layer after calculating the amount of lithium ions intercalated into the cathode active material by discharge for 10 sec based on the radius of the secondary particle. In the case of a primary particle of 0.5 $\mu$m diameter, the thickness necessary for the liquid electrolyte layer is 0.34 $\mu$m. Actually, since the secondary particle is an aggregate of primary particles, the necessary diameter for the pore between two adjacent primary particles is 0.68 $\mu$m which is twice the thickness for the liquid electrolyte layer. However, the strength of a secondary particle having a pore size about twice as large as the primary particle size is weak, and the particle is collapsed in a electrode coating process. Further, also In the case of a primary particle having 0.2 $\mu$m diameter, the necessary thickness for the liquid electrolyte layer is 0.21 $\mu$m, and it requires a secondary particle structure having a pore size twice as large as the primary particle size in the same manner as in the primary particle of 0.5 $\mu$m diameter. As described above, it is difficult to obtain a cathode material for use in the secondary battery having a secondary particle structure capable of keeping the liquid electrolyte suitable for 10 sec discharge to the inside of the secondary particle. Since the pore size cannot be increased, it is a problem how efficiently supplies the liquid electrolyte efficiently to individual primary particles constituting the secondary particle in order to attain high power.

Then, description is to be made to a particle structure of efficiently supplying a liquid electrolyte to individual primary particles constituting the secondary particle.

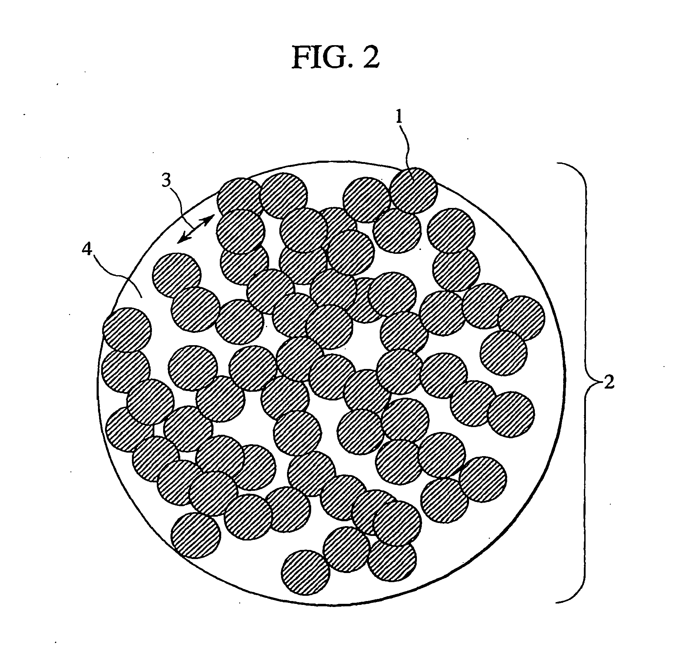

Fig. 2 shows a cross sectional structure of a pore formed in an existent cathode active material particle. The cathode active material particle comprises a secondary particle 2 formed by aggregation of primary particles 1 and the secondary particle has openings 3. Inside of the secondary particle, an ink bottle type pore 4 (pore opened on the particle surface and closed inside the particle) is present. When high rate discharge is conducted, supply of necessary lithium ions is lacking and release of anions which becomes excessive when lithium ions are intercalated into the cathode active material is also necessary as described above. Therefore, lithium ions and anions have to move at high speed in the liquid electrolyte. However, in the ink bottle type pore, movement of lithium ions and anions are concentrated at the opening shown in Fig. 2, which hinders high speed movement of the lithium ions and the anions.

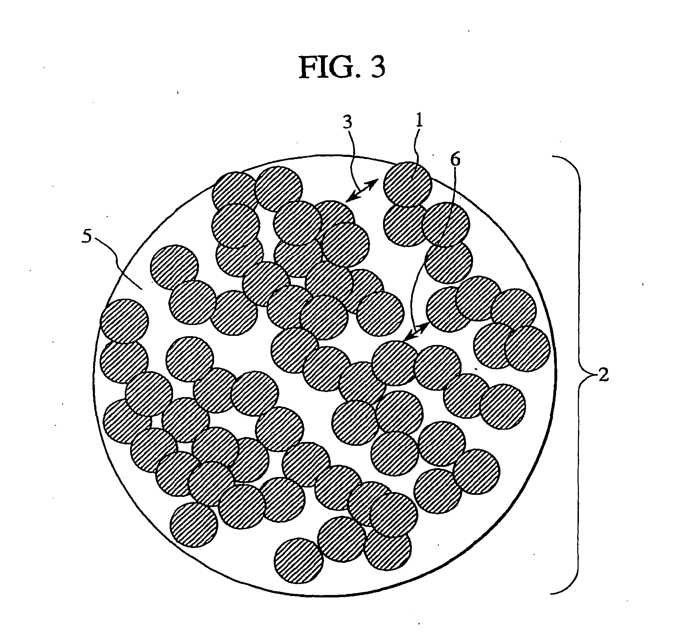

In view of the above, the present inventors have devised a through pore type pore structure of the cathode active material particle shown in Fig. 3 and found that high power can be attained by the network interconnection of the through pore type structures in the cathode.

Fig. 3 shows a cross sectional structure of through pores formed in the cathode active material particle of the invention. In a through pore 5, lithium ions or anions in the liquid electrolyte enter from an opening of the secondary particle on one side and flows out of the opening on the other side. In this structure, the lithium ions or anions can be moved efficiently for individual primary particles constituting the secondary particle. Further, the lithium ions or anions flowing out of the opening reach the opening of the next secondary particle by way of the pores in the cathode, and flow out of the opening of the through pore. Due to the diffusion network for the lithium ions or anions, high speed movement of the lithium ions or anions, which are required for the primary particles of the cathode active material over the entire cathode, is enabled to improve the high rate discharge characteristics. If a neck portion 6 shown in Fig. 3 (a portion where the diameter of the through pore is smallest when the diameter of the through pore is measured by Perm Porometry) shown in Fig. 3 is present in the through pore, since the pore size dominates the movement of the lithium ions and the anions over the entire pores, the evaluation for the neck portion in the through pore is important.

The method of evaluating the pore structure in the cathode structure is to be described below.

Mercury intrusion porosimetry is used as a method of evaluating the pores formed in the cathode active material particle. Generally, when the pores formed in the cathode active material is measured by the mercury intrusion porosimetry, the pore size of the openings formed on the cathode active material (open pore) is evaluated. In the mercury intrusion porosimetry, mercury intrudes from the opening, and the pore size and the pore volume can be evaluated. The principle for the measurement of the pore distribution by the mercury intrusion porosimetry is shown below.

When mercury is intruded to a cylindrical pore 2r, the pore radius r is determined according to the following equation (1) assuming the pressure of mercury as P, and the surface tension of mercury as $\gamma$ (0.48 N/m):

$$r = -2r\gamma\cos\theta/P \qquad\qquad (1)$$

According to the relation described above, mercury can intrude into the pore having a diameter of 7 nm to 400 $\mu$m under a pressure of about 3.7 kPa to 200 MPa, and the pore distribution within the range can be analyzed. For intruding mercury to the pore at an nm order, a pressure as high as about 2000 atm is necessary. However, since there are many voids in the secondary particle with a specific surface area of 1.1 m$^2$/g or more such as the cathode material of the invention, a specimen is destroyed under a high pressure and measurement for pores of 1 $\mu$m or less is difficult.

Accordingly, In the case of the through pore structure of the invention shown in Fig. 3, only the pore size for the opening is evaluated by the mercury intrusion porosimetry.

In the through pore of the secondary particle of the cathode material of the invention, since the movement of lithium ions or anions is dominated by the neck portion of the pore, evaluation for permeation by Perm Porometry is necessary.

The Perm Porometry is an evaluation method for the through pore by a bubble point method (JIS K3832). The bubble point method acquires the bubble point diameter, that is, a maximum pore size based on a bubble point as a pressure at the instance where the liquid is extruded by wetting a porous specimen with a liquid, applying an air pressure and gradually increasing the pressure. By applying and expanding the bubble point method, measuring the relation between an air pressure and an air flow rate makes it possible to determine the pore size distribution of the through pores. While the mercury intrusion porosimetry measures the opening for the through pore or semi-through pore (refer to reference numeral 3 in Fig. 3), the Perm Porometry can measure the neck portion (refer to reference numeral 6 in Fig. 3) dominating the permeability of a liquid.

The pore size distribution is determined by the method shown below. A wet flow curve is measured in the state of wetting a specimen and, further, a dry flow curve is measured in a state of drying the specimen. The intersection between the wet flow curve and the dry flow curve determines a minimum pore size. Further, the pore size D can be determined based on an air pressure P according to the formula (2) of the bubble point shown below.

$$D = C\gamma/P \qquad\qquad (2)$$

In this case, C represents a pressure constant and $\gamma$ represents a surface tension of a liquid. In the Perm Porometry, a liquid having a lower surface tension than mercury is used, and the distribution of fine pores of 1 $\mu$m or less is measured at about 10 atm or lower.

In the invention, when the diameter for the narrowest pore of the through pores of the secondary particle (diameter for the neck portion) is measured by the Perm Porometry, the diameter is more than 0.1 $\mu$m and less than 0.3 $\mu$m.

Further, it is preferred that the ratio of the diameter distribution for the narrowest through pores within a range of more than 0.1 $\mu$m and less than 0.3 $\mu$m be more than 3% based on the distribution of the through pores of 1 $\mu$m or less being defined as 100%. If it is less than 3%, since the material does not move smoothly in the cathode active material, the electrode resistance is not lowered to decrease the battery power.

The cathode active material in the invention is preferably a known layered composite oxide containing, for example, lithium, manganese, nickel and cobalt, and represented by the chemical formula:

$$Li_aMn_xNi_yCo_zO_2$$

($0 < a \le 1.2$, $0.1 \le x \le 0.9$, $0.1 \le y \le 0.9$, $0.1 \le z \le 0.34$, and $x+y+z = 1$).

The cathode material of the invention may further contain a hollow carbon material. Vacancy of the hollow carbon material can provide the same function and effect as those of the through pore of the secondary particle. The hollow carbon material is a hollow carbon material such as of acetylene black and, more preferably, a hollow fibrous carbon material. The length of the hollow carbon material is, for example, 1 $\mu$m to 10 $\mu$m and, more preferably, 2 $\mu$m to 8 $\mu$m. The hollow fibrous carbon material preferably has a diameter, for example, of more than 10 nm and less than 300 nm and, more preferably, more than 20 nm and less than 80 nm, and has a length within a range from 3 $\mu$m to 8 $\mu$m.

(Method of producing a cathode material for lithium secondary battery)

For the formation of through pores in the secondary particle, it is important to decrease the particle size of the primary particles constituting the secondary particle. In the sintering process for the secondary particle formed by aggregation of primary particles of a small particle size, a network of pores is formed in the secondary particles and the pores penetrate through the secondary particle. Further, to manufacture such a secondary particle, it is necessary to suppress the grain growth of the primary particles. When the primary particles conduct growing, grown particles disconnect the pore network. Accordingly, to obtain a secondary particle having through pores, primary particles of decreased particle size are necessary as the starting material, and it is necessary to control the growth of the primary particles by controlling the baking conditions of the secondary particles formed by aggregation of the primary particles. Further, as far as the crystal growth of particles is concerned, the growing rate of the primary particles is also different greatly on the composition of the cathode active material composition to be used. In particular, a cathode active material composition represented by:

$Li_aMn_xNi_yCo_zO_2$ ($0 < a \le 1.2$, $0.1 \le x \le 0.9$, $0.1 \le y \le 0.9$, $0.1 \le z \le 0.34$, $x+y+z = 1$) is preferred since this causes less grain to grow and can preferably form the through pores in the secondary particle.

For example, when the atomic ratio for Ni:Mn:Co has a high Co content such as 3:3.5:3.5, the primary particles conducts grain growth, and it is sometimes difficult to prepare a desired particle structure.

When granulation is conducted by using the cathode material starting material, it is preferred to gradually dry the granulated particles of much water content, by which the amount of voids in the cathode active material particle can be controlled. Referring to the drying method, the amount of voids can be increased by lowering the powder drying temperature of a granulation apparatus by 10°C or lower than the usual drying temperature.

Further, according to another method of forming the through pores in the secondary particle, a secondary particle having through pores can be prepared by mixing primary particles of the small particle size, for example, with a hollow carbon material and granulating and baking the composite body.

In this case, it is an important point of the manufacturing method to composite a hollow carbon material having an electron conductivity, more preferably, a hollow fibrous carbon material into a secondary particle. After baking the composite body, the hollow carbon material may or may not remain in the secondary particle. Since the hollow carbon material inherently has electron conductivity and functions as a conduction material, even when the hollow carbon material remains in the secondary particles after baking, it does not hinder attainment for the high power of the cathode. Further, it is considered that the network of the hollow carbon material or hollow fibrous carbon material is formed in the secondary particle, and the liquid electrolyte of the lithium secondary battery moves along the carbon network formed with the carbon material.

On the other hand, when the secondary particle is composited with a fibrous organic material having no electron conductivity for forming the pores in the secondary particle, the organic material remaining between the primary particles lowers the electron conductivity to hinder the attainment for high power of the cathode.

The method of producing the cathode material according to the invention includes a method of preparing a secondary particle by granulating primary particles (hereinafter referred to as a granulation method) or a coprecipitation method, and specific manufacturing methods are as described below.

<Method of producing a cathode material by granulation method>

A cathode material can be produced by the following steps (a) to (e):

(a) Metal oxides as the starting material for the cathode active material are mixed so as to form $Mn_xNi_yCo_z$ ($0.1 \leq x \leq 0.9$, $0.1 \leq y \leq 0.9$, $0.1 \leq z \leq 0.34$, $x+y+z = 1$) and pulverized by a bead mill or the like to prepare primary particles having a particle size mainly more than 0.1 $\mu$m and less than 0.5 $\mu$m. They are pulverized such that the primary particles with a particle size preferably of more than 0.1 $\mu$m and less than 0.5 $\mu$m are present by 98% by volume or more of the metal oxides.

(b) A known binder for granulating a secondary particle, for example, polyvinyl alcohol (hereinafter simply referred as PVA) is added to the primary particles, which are granulated by a spray drier or the like. After granulation, they are preferably dried gradually as described above. Further, a hollow carbon material may be added preferably by 1 to 6% for granulation based on the weight of the metal oxides.

(c) A lithium compound, for example, lithium hydroxide or lithium carbonate is added preferably, for example, such that lithium : (nickel, cobalt, and manganese) = from 1 to 1.2: 1.

(d) The particles after addition of the lithium compound are baked in an atmospheric air, preferably, at 750°C or higher and 850°C or lower and, preferably, for 3 to 10 hours.

(e) The baked particles are crushed to manufacture secondary particles. After crushing, they are preferably classified to remove coarse particles.

<Method of producing a cathode material by coprecipitation method>

The cathode material can be produced by the following steps (a) to (d):

(a) A mixed solution of metal salts as the starting material for the cathode active material is manufactured so as to form, for example, $Mn_xNi_yCo_z$ ($0.1 \leq x \leq 0.9$, $0.1 \leq y \leq 0.9$, $0.1 \leq z \leq 0.34$, $x+y+z = 1$). A solution of a hydroxide such as sodium hydroxide is added to the mixed solution, and composite metal hydroxide particles are prepared by a coprecipitation method. The particle is spherical formed by aggregation of a plurality of primary particles having a particle size of more than 0.1 $\mu$m and less than 0.5 $\mu$m. Preferably, primary particles with the particle size of more than 0.1 $\mu$m and less than 0.5 $\mu$m are present by 98% by volume or more of the obtained entire cathode active material powder. For this purpose, the particle size of the primary particles may be controlled by adjusting pH within a range from 10 to 11 in the manufacture of the cathode active material. Further, it is preferred to gradually dry the particles obtained by the coprecipitation method as described above.

Further, a hollow carbon material may be added by 1 to 6% based on the weight of the metal salt to the particles obtained by the coprecipitation method and further granulated, for example, by spray drier with addition of a binder such as PVA.

(b) A lithium compound, for example, lithium hydroxide or lithium carbonate is added to the particles of the composite metal hydroxide or to the granulated particles, which are manufactured in the step (a), for example, such that lithium : (nickel, cobalt, and manganese) = from 1 to 1.2:1.

(c) The particle after addition of the lithium compound is baked in an atmospheric air, preferably, at 750°C or higher and 850°C or lower and, preferably, for 3 to 10 hours.

(d) The baked particles are crushed to manufacture a secondary particle. After crushing, they are preferably classified to remove coarse particles.

The distribution for the through pores of the secondary particle obtained by the manufacturing method described above was evaluated by the Perm Porometry described above. As a result, when the ratio of the narrowest diameter distribution of the through pores of more than 0.1 $\mu$m and less than 0.3 $\mu$m is more than 3% based on the distribution of the through pores of 1 $\mu$m or less being assumed as 100%, since the material moves smoothly in the cathode active material, the electrode resistance is lowered and the power of the lithium ion secondary battery manufactured by the method disclosed below was improved. On the other hand, when the ratio of the narrowest diameter distribution of the through pores of more than 0.1 $\mu$m and less than 0.3 $\mu$m was 3% or less based on the distribution of the through pores of 1 $\mu$m or less being assumed as 100%, the electrode resistance was not lowered to decrease the battery power.

<Method of producing a lithium ion secondary battery >

The lithium ion secondary battery of the invention may be in any of cylindrical, lamination, coin, or card type with no particular restriction and description is to be made for the method of producing a cylindrical lithium ion secondary battery as an example.

After adding a conduction material such as graphite, acetylene black, or carbon black to the secondary particle of the cathode active material manufactured to be mixed as described above, a binder such as polyvinylidene fluoride (hereinafter simply referred to as PVDF) dissolved in a solvent, for example, N-methyl-2-pyrrolidinone (hereinafter simply referred to as NMP) is added and kneaded to obtain a cathode slurry. Then, after coating the slurry on an aluminum metal foil, it is dried to manufacture a cathode plate.

A conduction material such as carbon black, acetylene black, or carbon fibers is added to graphite carbon or soft carbon as the anode active material to be mixed. After adding PVDF or rubbery binder (SBR, etc.) dissolved in NMP as a binder, they were kneaded to obtain an anode slurry. Then, after coating the slurry on a copper foil, they are dried to manufacture an anode plate.

For the cathode and the anode plate, slurry is coated on both surfaces of the electrodes and then dried. Further, they are densified by pressing and each cut into a predetermined shape to manufacture electrodes. Then, a lead piece for supplying a current to the electrodes is formed. A separator made of a porous insulation material is put between the cathode and the anode and, after winding them, they are inserted into a battery casing molded from stainless steel or aluminum. Then, after connecting the lead pieces and the battery casing, a non-aqueous liquid electrolyte is injected and, finally, the battery casing is sealed to obtain a lithium ion secondary battery.

[Battery module]

The mode of using the lithium ion secondary battery described above includes a lithium ion battery module in which a plurality of batteries are connected in series. In the battery module using the lithium ion secondary battery of the invention, high power and high capacitance can be made compatible.

[Example]

The present invention is to be described by way of examples but the range of invention is not restricted by the examples.

[Example 1]

<Manufacture of secondary particle of cathode active material by granulation method>

Manganese dioxide, cobalt oxide, and nickel oxide were used as the starting material and, after weighing such that they were at a ratio of Ni:Mn:Co of 3:4:3 by atomic ratio, pure water was added to form a slurry. The slurry was pulverized by a zirconia bead mill until the average particle size was 0.2 $\mu$m to manufacture primary particles. A PVA solution was added by 1 wt% based on the solid ratio to the slurry, mixed for further one hour, and granulated and dried by a spray drier to manufacture particles of 5 to 30 $\mu$m. Lithium hydroxide and lithium carbonate were added to the granulated particles such that the Li:(NiMnCo) ratio was 1.05:1. Then, the powder was baked at 850°C for 3 to 10 hours to form crystals of a layered structure, and subsequently particles crushed and removed with coarse particles with a particle size of 30 $\mu$m or more by classification were used as secondary particles (1), for the manufacture of an electrode.

<Evaluation for pore distribution>

A cathode plate was manufactured by the following procedures using the secondary particle (1) described above. A solution in which PVDF as a binder was previously dissolved in NMP as a solvent, the secondary particles (1) and a carbonaceous conduction material were mixed uniformly to manufacture a cathode mix slurry. In this case, they were mixed such that the secondary particle (1), the carbonaceous conduction material, and the binder were at a ratio of 85:10.7:4.3 respectively as represented by weight percent. After coating the slurry on an aluminum mesh sheet of 20 $\mu$m thickness, it was dried at 100°C and pressurized at 1.5 ton/cm$^2$ by a press to form a coating layer of about 100 $\mu$m thickness.

The cathode plate was cut out into a disk-shape of 13 mm diameter and the permeability was evaluated by using a Perm Porometer manufactured by Porous Material Inc. In this case, a silicone type Silwick (surface tension: 0.019 N/m) was used as a reagent for wetting the specimen. As a result, through pores of more than 0.1 $\mu$m and less than 0.3 $\mu$m were present, and the ratio of the distribution of the through pores in the distribution of the through pores of 1 $\mu$m or less was 20%.

Then, the cathode plate was cut out into 2 cm square and measurement was conducted for the pore size distribution by mercury intrusion porosimetry by using a Pore Sizer 9320 manufactured by Micromeritics Co. As a result, while the distribution for the pore size of 1 $\mu$m or less was recognized, the pore size of 0.2 $\mu$m or less could not be confirmed.

<Measurement for specific surface area>

The secondary particles (1) were previously dried at 120°C, filled in a specimen cell, and dried in a nitrogen gas at 300°C for 30 min. Then, the specimen cell was mounted on a measuring section and, after counting signals upon desorption with an He/N$_2$ gas mixture, the specific surface area was calculated according to the BET method. As a result, the specific surface area of the secondary particles was within a range from 1.1 m$^2$/g or more and 1.6 m$^2$/g or less.

<Evaluation for cylindrical battery>

To manufacture a cylindrical battery, a cathode plate was manufactured by the following procedures using the secondary particles (1). A cathode mix slurry was manufactured by uniformly mixing a solution formed by previously dissolving PVDF as a binder in a NMP as a solvent, the secondary particles (1), and a carbonaceous conduction material. In this case, the cathode material, the carbonaceous material, and the binder were mixed such that they are at a ratio of 85:10.7:4.3 when represented by weight ratio respectively. After coating the slurry uniformly on an aluminum collector foil of 20 $\mu$m thickness, it was dried at 100°C, and pressurized at 1.5 ton/cm$^2$ by pressing to form a coating layer of about 40 $\mu$m thickness. The cathode plate was cut to a coating width of 5.4 cm and a coating length of 50 cm, and lead pieces made of an aluminum foil were welded for taking out a current to manufacture a cathode plate.

Then, an anode plate was manufactured for manufacturing a cylindrical battery in combination with the cathode plate. An anode mix slurry was prepared in which graphite carbon of an anode active material (hereinafter referred to as GC) is mixed by being dissolved in NMP as a binder. In this case, it was adjusted such that the GC material and the binder were at 92:8 by dried weight ratio. The slurry was uniformly coated on a rolled copper foil of 10 $\mu$m. Then, it was shaped under compression by a roll press and cut into a coating width of 5.6 cm and a coating length of 54 cm, to which lead pieces made of a copper foil were welded to manufacture an anode plate.

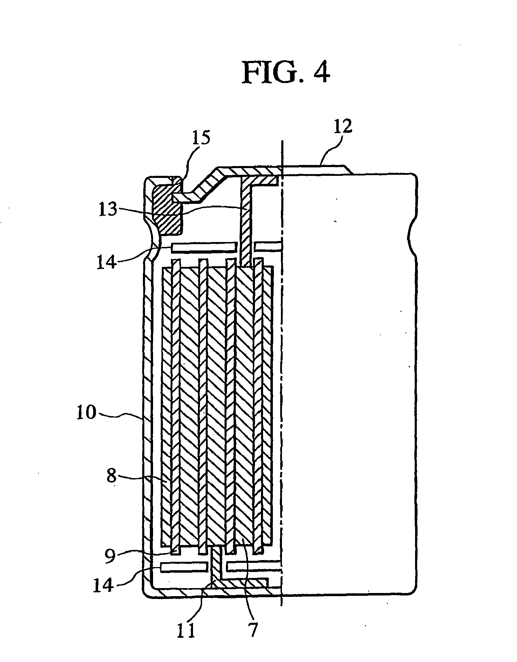

A cylindrical battery schematically shown in Fig. 4 was manufactured by the following procedures using the cathode plate and the anode plate manufactured as described above. First, an electrode group was manufactured by interposing a separator 9 between the anode plate 7 and the cathode plate 8 such that they were not in direct contact with each other and winding them. In this case, the lead piece 13 for the cathode plate and the lead piece 11 for the anode plate were positioned on both end faces of the electrode group on the side opposite to each other. Further, in the arrangement for the cathode plate 7 and the cathode plate 8, the cathode mix coating area was set so as not to extend beyond the anode mix coating area. Further, the separator 9 used herein was a finely porous polypropylene film of 25 $\mu$m thickness and 5.8 cm width. Then, the electrode group was inserted into a battery casing 10 made of SUS, the anode lead piece 11 was welded to the bottom of the casing, and a cathode lead piece 13 was welded to a sealing lid portion 12 that functioned also as a cathode current terminal. After injecting a non-aqueous liquid electrolyte (LiPF$_6$ dissolved

at 1.0 mol/L to a solvent mixture of ethylene carbonate (EC) and dimethyl carbonate (DMC) at 1:2 volumic ratio) to the battery casing 10 in which the electrode group was arranged, they were tightly sealed by caulking a sealing lid 12 attached with a packing 15 to the battery casing 10 to manufacture a cylindrical battery of 18 mm diameter and 65 mm length. In this case, the sealing lid 12 had a bursting valve that was burst when the pressure in the battery increases to relieve the pressure inside of the battery, and an insulation plate 14 was disposed between the sealing lid 12 and the electrode group.

The small cylindrical battery was initialized by repeating charge and discharge three times to an upper limit voltage of 4.2 V and a lower limit voltage of 2.7 V at 0.3C. Further, charge and discharge at an upper limit voltage of 4.2 V and a lower limit voltage of 2.7 V at 0.3C were conducted to measure the battery discharge capacitance. Then, after applying constant current and constant voltage charging at an upper voltage of 4.2 V for 5 hours at 0.3C, equivalent constant current discharge to the lower limit voltage of 2.7 V at 1C equivalent was conducted, and an open circuit voltage before discharge and a voltage after 10 sec discharge were measured to determine a voltage drop ($\Delta$V) as the difference between them. Further, the discharge current was changed to 3C equivalent, 6C equivalent, and identical charge and discharge were conducted to measure the voltage drop at each discharge current (I). The discharge current (I) and the voltage drop ($\Delta$V) were plotted to calculate the cell resistance based on the slant. Then, the battery power was determined based on the open circuit voltage and the battery resistance at 50% battery charged state.

The test battery power and the energy density of cylindrical batteries using the secondary particle (1) are shown in the column for Example 1 of Table 1.

Table 1

| Example | Comparative Example | Composition ratio (Atomic ratio %) | | | Particle manufacturing method | Starting material primary particle size ($\mu$m) | Specific surface area of the secondary particle ($m^2$/g) | Cathode active material baking temperature (°C) | Fine through pore ratio (%)* | Test battery power density (W/kg) | Test battery energy density (Wh/kg) |
|---|---|---|---|---|---|---|---|---|---|---|---|
| | | Ni | Mn | Co | | | | | | | |
| Example 1 | | 3 | 4 | 3 | granulation | More than 0.1 and less than 0.5 | 1.1 or more and 1.6 or less | 850 | 20 | 3300 | 86 |
| | Comparative Example 1 | 3 | 4 | 3 | granulation | 0.1 or less on average | 1.7 or more and 1.9 or less | 850 | 30 | 2805 | 79 |
| | Comparative Example 2 | 3 | 4 | 3 | granulation | 0.5 or more on average | 0.7 or more and 1.0 or less | 850 | 3 | 2640 | 92 |
| Example 2 | | 3 | 4 | 3 | coprecipitation | More than 0.1 and less than 0.5 | 1.1 or more and 1.6 or less | 850 | 15 | 3234 | 90 |
| | Comparative Example 3 | 3 | 4 | 3 | coprecipitation | 0.5 or more on average | 0.7 or more and 1.0 or less | 850 | 1 | 2310 | 97 |
| Example 3 | | 3 | 4 | 3 | granulation | More than 0.1 and less than 0.5 | 1.1 or more and 1.6 or less | 850 | 24 | 3531 | 81 |
| Example 4 | | 3 | 4 | 3 | coprecipitation | More than 0.1 and less than 0.5 | 1.1 or more and 1.6 or less | 850 | 22 | 3564 | 84 |

(continued)

| Example | Comparative Example | Composition ratio (Atomic ratio %) | | | Particle manufacturing method | Starting material primary particle size ($\mu$m) | Specific surface area of the secondary particle ($m^2$/g) | Cathode active material baking temperature (°C) | Fine through pore ratio (%)* | Test battery power density (W/kg) | Test battery energy density (Wh/kg) |
|---|---|---|---|---|---|---|---|---|---|---|---|
| | | Ni | Mn | Co | | | | | | | |
| | Comparative Example 4 | 3 | 3.5 | 3.5 | granulation | More than 0.1 and less than 0.5 | 0.9 or more and 1.09 or less | 850 | 1 | 2310 | 79 |
| | Comparative Example 5 | 3 | 4 | 3 | granulation | More than 0.1 and less than 0.5 | 0.8 or more and 1.0 or less | 950 | 1 | 2244 | 97 |

* Fine through pore ratio = (distribution for narrowest diameter of through pores of more than 0.1 $\mu$m and less than 0.3 $\mu$m)/(distribution for through pores with diameter of 1 $\mu$m or less) x 100%

In the battery using the secondary particle 1, the power was 3300 W/kg and the energy density was 86 Wh/kg. As described above, in the cylindrical battery using the secondary particle (1), high power and high energy density of the battery were compatible. Then, the batteries were connected in series by the number of 10 and a battery module capable of making the high power and the high energy density of the battery compatible could be obtained.

[Example 2]

<Manufacture of secondary particle of cathode active material by coprecipitation method>

A solution mixture of nickel sulfate, cobalt sulfate, and manganese sulfate was provided such that the molar ratio of nickel : manganese : cobalt was 3:4:3. The solution was added together with a solution of 12% sodium hydroxide simultaneously to a reaction vessel, pH was maintained within a range from 10 to 11, the reaction temperature was maintained in a range from 50°C to 80°C constantly, and nickel manganese cobalt composite hydroxide particles were manufactured by a coprecipitation method. Then, the entire amount of the hydroxide slurry in the reaction vessel was recovered, filtered, washed with water, and then dried to obtain a dried powder of the composite nickel cobalt manganese hydroxide. The composite metal hydroxide was a spherical particle in which a plurality of primary particles with a particle size of more than 1 μm and less than 0.5 μm were aggregated.

After weighing the composite nickel cobalt manganese hydroxide and commercial lithium hydroxide such that the atomic ratio of nickel, cobalt and manganese to lithium was 1:1.05, they were thoroughly mixed by such an extent of intensity that the form of spherical particles was maintained. Then, the particles were baked at 850°C for 3 to 10 hours to form crystals of layered structure, and particles subsequently crushed and removed with coarse particles with a particle size of 30 μm or more by classification were used as the secondary particle (2) for the manufacture of the electrode.

<Evaluation for pore distribution>

A cathode plate was manufactured in the same manner as in Example 1 by using the secondary particle (2). Then, as a result of evaluating the permeability in the same manner as in Example 1, through pores of more than 0.1 μm and less than 0.3 μm were present, and the ratio of the through pore was such that the ratio thereof in the through pore distribution of 1 μm or less was 15% (refer to the column for Example 2 in Table 1).

<Measurement for specific surface area>

The specific surface area was calculated in the same manner as in Example 1 by using the secondary particle (2). As a result, the specific surface area of the secondary particle was within a range of 1.1 m$^2$/g or more and 1.6 m$^2$/g or less.

<Evaluation for cylindrical battery>

A cathode plate, an anode plate, and a cylindrical battery were manufactured in the same procedures as those in Example 1 by using the secondary particle (2). The test battery power and the energy density of the test battery of the cylindrical battery calculated by the method shown in Example 1 are shown in the column for Example 2 in Table 1. In the battery using the secondary particle (2), the power was 3234 W/kg and the energy density was 90 Wh/kg. As described above, in the cylindrical battery using the secondary particle (2), the high power and the high energy density of the battery were compatible. Then, the batteries were connected in series by the number of 10 and a battery module capable of making the high power and the high energy density of the battery compatible could be obtained.

[Example 3]

<Manufacture of secondary particles of cathode active material by granulation method>

In the same manner as in Example 1, manganese dioxide, cobalt oxide, and nickel oxide were used and, after weighing such that the Ni:Mn:Co ratio was 3:4:3 by atomic ratio, pure water was added to form a slurry. The slurry was pulverized by a zirconia bead mill until the average particle size was 0.2 μm to manufacture primary particles. Then, hollow carbon fibers with a diameter of more than 100 nm and less than 300 nm and with a length of 3 μm to 8 μm were added and mixed to the slurry by 2% based on the weight of the starting oxide material. Further, a PVA solution were added by 1 wt% based on the solid ratio to the slurry, mixed for further one hour, and granulated and dried by a spray drier to manufacture particles of 5 to 30 μm. Lithium hydroxide and lithium carbonate were added to the granulated particles such that the ratio of Li:(NiMnCo) was 1.05:1. Then, the powder was baked at 850°C for 3 to 10 hours to form crystals of a layered structure, and then particles subsequently crushed and removed with coarse particles with a particle size of 30 μm or more by classification were used as the secondary particles (3) for the manufacture of the electrode.

<Evaluation for pore distribution>

A cathode plate was manufactured in the same manner as in Example 1 by using the secondary particle (3). Then, as a result of evaluation of the permeability in the same manner as in Example 1, through pores of more than 0.1 μm and less than 0.3 μm were present, and the ratio of the through pore distribution in the through pore distribution of 1 μm or less was 24% (refer to the column for Example 3 in Table 1).

<Measurement for specific surface area>

The specific surface area was calculated in the same manner as in Example 1 by using the secondary particle (3). As a result, the specific surface area of the secondary particle was within a range of 1.1 m2/g or more and 1.6 m2/g or less.

<Evaluation for cylindrical battery>

A cathode plate, an anode plate, and a cylindrical battery were manufactured in the same procedures as those in Example 1 by using the secondary particle (3). The test battery power and the energy density of the test battery for the cylindrical battery calculated by the method shown in Example 1 are shown in the column for Example 3 in Table 1. In the battery using the secondary particle (3), the power was 3531 W/kg and the energy density was 81 Wh/kg. As described above, in the cylindrical battery using the secondary particle (3), the high power and the high energy density of the battery were compatible.

Then, the batteries were connected in series by the number of 10 and a battery module capable of making the high power and the high energy density of the battery compatible could be obtained.

Further, when hollow acetylene black (particle size: 50 nm to 100 nm) is added instead of hollow carbon fibers by 3% based on the weight of the starting oxide material, through pores of more than 0.1 μm and less than 0.3 μm were present and the ratio of the pore size distribution in the distribution for the through pores of 1 μm or less was 17%. Further, the battery power was 3430 W/kg and the energy density was 80 Wh/kg and the same effect as the hollow carbon fibers was obtained.

[Example 4]

<Manufacture of secondary particle of cathode active material by coprecipitation method>

A solution mixture of nickel sulfate, cobalt sulfate, and manganese sulfate was provided such that the molar ratio of nickel : manganese : cobalt was 3:4:3. The solution was added together with a solution of 12% sodium hydroxide simultaneously to a reaction vessel, pH was maintained within a range from 10 to 11, the reaction temperature was maintained within range from 50°C to 80°C constantly, and composite nickel manganese cobalt hydroxide particles were prepared by a coprecipitation method. Then, the entire amount of the hydroxide slurry in the reaction vessel was recovered, filtered, washed with water and then dried to obtain a dried powder of the composite nickel cobalt manganese hydroxide. Then, hollow carbon fibers with a diameter of 100 nm to 300 nm and with a length of 3 μm to 8 μm were added and mixed to the slurry by 2% based on the weight of the sulfate starting material. After adding water to the powder, they were pulverized by a zirconia bead mill to form a slurry. Further, a PVA solution were added by 1 wt% based on the solid ratio to the slurry, mixed for further one hour, and granulated and dried by a spray drier to manufacture particles of 5 to 30 μm. Lithium hydroxide and lithium carbonate were added to the granulated particles such that the ratio of Li: (NiMnCo) was 1.05:1. Then, the powder was baked at 850°C for 3 to 10 hours to form crystals of a layered structure, and then particles subsequently crushed and removed with coarse particles with a particle size of 30 μm or more by classification were used as the secondary particle (4) for the manufacture of the electrode.

<Evaluation for pore distribution>

A cathode plate was manufactured in the same manner as in Example 1 by using the secondary particle (4). Then, as a result of evaluation of the permeability in the same manner as in Example 1, through pores of more than 0.1 μm and less than 0.3 μm were present, and the ratio of the through pores distribution was 22% in the through pore distribution of 1 μm or less (refer to the column for Example 4 in Table 1).

<Measurement for specific surface area>

The specific surface area was calculated in the same manner as in Example 1 by using the secondary particle (4). As a result, the specific surface area of the secondary particle was within a range of 1.1 m$^2$/g or more and 1.6 m$^2$/g or less.

<Evaluation for cylindrical battery>

A cathode plate, an anode plate, and a cylindrical battery were manufactured in the same procedures as those in Example 1 by using the secondary particle (4). The test battery power and the energy density of the test battery for the cylindrical battery calculated by the method shown in Example 1 is shown in the column for Example 4 in Table 1. In the battery using the secondary particle (4), the power was 3564 W/kg and the energy density was 84 Wh/kg. As described above, in the cylindrical battery using the cathode active material, the high power and the high energy density of the battery were compatible.

Then, the batteries were connected in series by the number of 10 and a battery module capable of making the high power and the high energy density of the battery compatible could be obtained.

Further, when hollow acetylene black is added instead of hollow carbon fibers by 3% based on the weight of the starting oxide material, through pores of more than 0.1 μm and less than 0.3 μm were present and the ratio of the pore size distribution body in the through pores distribution of 1 μm or less was 18%. Further, the battery power was 3460 W/kg and the energy density was 82 Wh/kg and the same effect as the hollow carbon fibers was obtained.

[Comparative Example 1]

<Manufacture of secondary particle of cathode active material by granulation method>

As the starting material, manganese dioxide, cobalt oxide, and nickel oxide were used and, after weighing such that the Ni:Mn:Co ratio was 3:4:3 by atomic ratio, pure water was added to form a slurry. The slurry was pulverized by a zirconia bead mill until the average particle size was 0.1 μm to prepare primary particles. Lithium hydroxide was added to the transition metal slurry such that the Li:(NiMnCo) ratio was 1.03:1. Further, a PVA solution was added by 1 wt% based on the solid ratio to the slurry, mixed for further one hour, and granulated and dried by a spray drier to manufacture particles of 5 to 30 μm. Then, the particles were baked at 850°C for 3 to 10 hours to form crystals of a layered structure, and then particles subsequently crushed and removed with coarse particles with a particle size of 30 μm or more by classification were used as the secondary particle (5) for the manufacture of the electrode.

<Evaluation for pore distribution>

A cathode plate was manufactured in the same manner as in Example 1 by using the secondary particle (5). Then, as a result of evaluation of the permeability in the same manner as in Example 1, through pores of more than 0.1 μm and less than 0.3 μm were present, and the ratio of the through pore distribution in the through pore distribution of 1 μm or less was 30% (refer to the column for Comparative Example 1 in Table 1).

<Measurement for specific surface area>

The specific surface area was calculated in the same manner as in Example 1 by using the secondary particle (5). As a result, the specific surface area of the secondary particles was within a range of 1.7 m$^2$/g or more and 1.9 m$^2$/g or less.

<Evaluation for cylindrical battery>

A cathode plate, an anode plate, and a cylindrical battery were manufactured in the same procedures as those in Example 1 by using the secondary particle (5). However, in the secondary particle (5), particles were collapsed in the kneading step, a fine powder was generated and aggregates were formed on the electrode surface. The test battery power and the energy density of the cylindrical battery are shown in the column for Comparative Example 1 in Table 1. In the battery using the secondary particle (5), the power was 2805 W/kg and the energy density was 79 Wh/kg. As described above, in the cylindrical battery using the cathode active material, high power battery exceeding 3000 W/kg obtained in Examples 1 to 4 could not be obtained.

[Comparative Example 2]

<Manufacture of secondary particle of cathode active material by granulation method>

As the starting material, manganese dioxide, cobalt oxide, and nickel oxide were used and, after weighing such that the Ni:Mn:Co ratio was 3:4:3 by atomic ratio, pure water was added to form a slurry. The slurry was pulverized by a zirconia bead mill until the average particle size was 0.7 $\mu$m to prepare primary particles. Lithium hydroxide was added to the transition metal slurry such that the Li:(NiMnCo) ratio was 1.03:1. Further, a PVA solution were added by 1 wt% based on the solid ratio to the slurry, mixed for further one hour, and granulated and dried by a spray drier to manufacture particles of 5 to 30 $\mu$m. Then, the particles were baked at 850°C for 3 to 10 hours to form crystals of a layered structure and then particles subsequently crushed and removed with coarse particles with a particle size of 30 $\mu$m or more by classification were used as the secondary particle (6) for the manufacture of the electrode.

<Evaluation for pore distribution>

A cathode plate was manufactured in the same manner as in Example 1 by using the secondary particle (6). Then, as a result of evaluation of the permeability in the same manner as in Example 1, through pores of more than 0.1 $\mu$m and less than 0.3 $\mu$m were present, and the ratio of the through pore distribution in the through pore distribution of 1 $\mu$m or less was 3% (refer to the column for Comparative Example 2 in Table 1).

<Measurement for specific surface area>

The specific surface area was calculated in the same manner as in Example 1 by using the secondary particle (6). As a result, the specific surface area of the secondary particle was within a range of 0.7 m$^2$/g or more and 1.0 m$^2$/g or less.

<Evaluation for cylindrical battery>

A cathode plate, an anode plate, and a cylindrical battery were manufactured in the same procedures as those in Example 1 by using the secondary particle (6). The test battery power and the energy density of the cylindrical battery calculated by the method shown in Example 1 are shown in the column for Comparative Example 2 in Table 1. In the battery using the secondary particle (6), the power was 2640 W/kg and the energy density was 92 Wh/kg. As described above, in the cylindrical battery using the cathode active material with small number of through pores, a high power battery exceeding 3000 W/kg obtained in Examples 1 to 4 could not be obtained.

[Comparative Example 3]

<Manufacture of secondary particle of cathode active material by coprecipitation method>

A solution mixture of nickel sulfate, cobalt sulfate, and manganese sulfate was prepared such that the molar ratio of nickel : manganese : cobalt was 3:4:3. The solution was added together with a solution of 12% sodium hydroxide simultaneously to a reaction vessel, pH was maintained within a range from 10 to 11, the reaction temperature was maintained within a range from 50°C to 80°C constantly, and composite nickel manganese cobalt hydroxide particles were prepared by a coprecipitation method. Then, the entire amount of the hydroxide slurry in the reaction vessel was recovered, filtered, washed with water and then dried to obtain a dried powder of the composite nickel cobalt manganese hydroxide. The composite metal hydrous oxide was a spherical particle in which a plurality of primary particles of 2 $\mu$m or less were aggregated. After weighing the composite nickel cobalt manganese hydroxide and commercial lithium hydroxide so as to provide an atomic ratio of nickel, cobalt, manganese to lithium at 1:1.05, they were mixed sufficiently to such a level of intensity that the form of the spherical particle is maintained. Then, the particles were baked at 850°C for 3 to 10 hours to form crystals of a layered structure, and particles subsequently crushed and removed with coarse particles with a particle size of 30 $\mu$m or more by classification were used as the secondary particle (7) for the manufacture of the electrode.

<Evaluation for pore distribution>

A cathode plate was manufactured in the same manner as in Example 1 by using the secondary particle (7). Then, as a result of evaluation of the permeability in the same manner as in Example 1, through pores of more than 0.1 $\mu$m and less than 0.3 $\mu$m were present, and the through pore distribution was such that the ratio thereof in the through pore distribution of 1 $\mu$m or less was 1% (refer to the column for Comparative Example 3 in Table 1).

<Measurement for specific surface area>

The specific surface area was calculated in the same manner as in Example 1 by using the secondary particle (7). As a result, the specific surface area of the secondary particle was within a range of 0.7 m$^2$/g or more and 1.0 m$^2$/g or less.

<Evaluation for cylindrical battery>

A cathode plate, an anode plate, and a cylindrical battery were manufactured in the same procedures as those in Example 1 by using the secondary particle (7). However, in the secondary particle (7), particles were collapsed in the kneading step and a fine powder was generated to form aggregates on the surface of the electrode. The test battery power and the energy density of the test battery for the cylindrical battery calculated by the method shown in Example 1 are shown in the column for Comparative Example 3 in Table 1. In the battery using the secondary particle (7), the power was 2310 W/kg and the energy density was 97 Wh/kg. As described above, in the cylindrical battery using the cathode active material with small number of through pores, high power battery exceeding 300 W/kg obtained in Examples 1 to 4 could not be obtained.

[Comparative Example 4]

<Manufacture of secondary particle of cathode active material by granulation method>

As the starting material, manganese dioxide, cobalt oxide, and nickel oxide were used and, after weighing such that the Ni:Mn:Co ratio was 3:3.5:3.5 by atomic ratio, pure water was added to form a slurry. The slurry was pulverized by a zirconia bead mill until the average particle size was 0.2 $\mu$m. Lithium hydroxide was added to the transition metal slurry such that the Li:(NiMnCo) ratio was 1.03:1. A PVA solution was added by 1 wt% based on the solid ratio to the slurry, mixed for further one hour, and granulated and dried by a spray drier to manufacture particles of 5 to 30 $\mu$m. Then, the particles were baked at 850°C for 3 to 10 hours to form crystals of a layered structure, and particles subsequently crushed and removed with coarse particles with a particle size of 30 $\mu$m or more by classification were used as the secondary particle (8) for the manufacture of the electrode.

<Evaluation for pore distribution>

A cathode plate was manufactured in the same manner as in Example 1 by using the secondary particle (8). Then, as a result of evaluation of the permeability in the same manner as in Example 1, through pores of more than 0.1 $\mu$m and less than 0.3 $\mu$m were present, and the through pore distribution was such that the ratio thereof in the through pore distribution of 1 $\mu$m or less was 1% (refer to the column for Comparative Example 4 in Table 1).

<Measurement for specific surface area>

The specific surface area was calculated in the same manner as in Example 1 by using the secondary particle (8). As a result, the specific surface area of the secondary particle was within a range of 0.9 m$^2$/g or more and 1.09 m$^2$/g or less.

<Evaluation for cylindrical battery>

A cathode plate, an anode plate, and a cylindrical battery were manufactured in the same procedures as those in Example 1 by using the secondary particle (8). However, in the secondary particle (8), particles were collapsed in the kneading step, a fine powder was generated and aggregates were formed on the electrode surface. The test battery power and the energy density of the cylindrical battery calculated by the method shown in Example 1 are shown in the column for Comparative Example 4 in Table 1. In the battery using the secondary particle (8), the power was 2310 W/kg and the energy density was 79 Wh/kg. As described above, in the cylindrical battery using the cathode active material with small number of through holes, high power battery exceeding 3000 W/kg obtained in Examples 1 to 4 could not be obtained.

[Comparative Example 5]

<Manufacture of secondary particle of cathode active material by granulation method>

As the starting material, manganese dioxide, cobalt oxide, and nickel oxide were used and, after weighing such that the Ni:Mn:Co ratio was 3:4:3 by atomic ratio, pure water was added to form a slurry. The slurry was pulverized by a zirconia bead mill until the average particle size was 0.2 $\mu$m to prepare primary particles. Lithium hydroxide was added to the transition metal slurry such that the Li:(NiMnCo) ratio was 1.03:1. A PVA solution was added by 1 wt% based on the solid ratio to the slurry, mixed for further one hour, and granulated and dried by a spray drier to manufacture particles of 5 to 30 $\mu$m. Then, the particles were baked at 950°C for 3 to 10 hours to form crystals of a layered structure, and then particles subsequently crushed and removed with coarse particles with a particle size of 30 $\mu$m or more by classification were used as the secondary particle (9) for the manufacture of the electrode.

<Evaluation for pore distribution>

A cathode plate was manufactured in the same manner as in Example 1 by using the secondary particle (9). Then, as a result of evaluation of the permeability in the same manner as in Example 1, through pores of more than 0.1 $\mu$m and less than 0.3 $\mu$m were present, and the through pore distribution was such that the ratio thereof in the through pore distribution of 1 $\mu$m or less was 1% (refer to the column for Comparative Example 5 in Table 1).

<Evaluation for cylindrical battery>

A cathode plate, an anode plate, and a cylindrical battery were manufactured in the same procedures as those in Example 1 by using the secondary particle (9). The test battery power and the energy density of the cylindrical battery calculated by the method shown in Example 1 are shown in the column for Comparative Example 5 in Table 1. In the battery using the secondary particle (9), the power was 2224 W/kg and the energy density was 97 Wh/kg. As described above, in the cylindrical battery using the cathode active material with small number of through pores, a high power battery exceeding 3000 W/kg obtained in Examples 1 to 4 could not be obtained.

<Measurement for specific surface area>

The specific surface area was calculated in the same manner as in Example 1 by using the secondary particle (9). As a result, the specific surface area of the secondary particle was within a range of 0.8 m$^2$/g or more and 1.0 m$^2$/g or less.

Then, a second aspect of the invention is to be described specifically.

(Cathode material for lithium secondary battery)

A cathode for use in a lithium secondary battery according to the second aspect of the invention comprises secondary particles of a cathode active material in which primary particles are bonded or aggregated. That is, the particle size of the primary particles constituting the secondary particle of the cathode active material is mainly more than 0.1 $\mu$m and less than 0.3 $\mu$m. "Mainly" means herein that primary particles having a particle size of more than 0.1 $\mu$m and less than 0.3 $\mu$m are present by 95% by volume or more for the entire primary particles. When the particle size of the primary particle is 0.3 $\mu$m or more, since the primary particles constituting the secondary particle are large, the specific surface area of the secondary particle is lowered to decrease the battery power. On the other hand, for the cathode active material where the primary particle size is less than 0.1 $\mu$m, handling is difficult upon synthesis of the cathode active material and industrial manufacture is difficult. In this case, the specific surface area of the cathode active material is preferably 1.1 m$^2$/g or more and less than 1.5 m$^2$/g for obtaining a high power battery. When the specific surface area is 1.5 m$^2$/g or more, aggregates are generated in the cathode coating step (to be described later) making it difficult to manufacture cathode. Further, the secondary particle size of the cathode active material is preferably 3 $\mu$m or more and 6 $\mu$m or less. When the secondary particle size of the cathode active material is less than 3 $\mu$m, it is difficult to constitute the secondary particle with the primary particles of the small particle size described above. On the other hand, when it exceeds 6 $\mu$m, the specific surface area is lowered and high power battery cannot be obtained.

The cathode active material is a layered composite oxide represented by the chemical formula: $Li_aMn_xNi_yCo_zO_2$ ($0 < a \leq 1.2$, $0.1 \leq x \leq 0.9$, $0.1 \leq y \leq 0.9$, $0.1 \leq z \leq 0.34$, and $x+y+z = 1$), and the composition is suitable for decreasing the partial size of the primary particles.

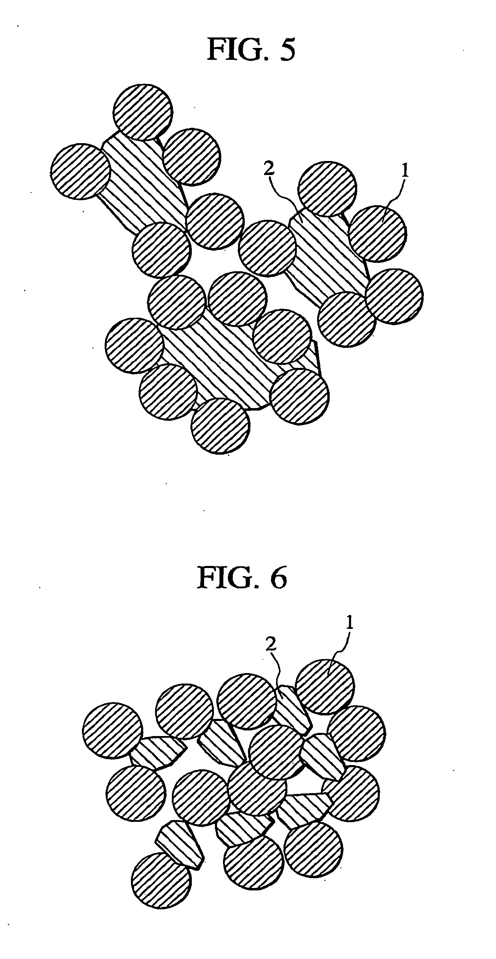

Generally, the particle size of the conduction material used for the cathode active material is larger than the particle size of the secondary particle (1) for cathode active material as shown in Fig. 5, and a plurality of the secondary particles for cathode active material are in contact with one conduction material particle 2 to form a conduction network together with the plurality of the cathode active material. As shown in Fig. 5, in the constitution of the cathode, less number of voids are present near the individual cathode active material. On the contrary, in the cathode shown in Fig. 6 of the invention, several cathode active material particles are in contact with a conduction material of a small particle size to form a conduction network. Further, in this cathode structure, many fine voids are present near the individual secondary particles of the cathode active material. Accordingly, the electrolyte in the liquid electrolyte near the secondary particle of the cathode active material tends to react with the cathode active material, and this is effective for lowering the resistance of the cathode. In the case where the size of the primary particles constituting the secondary particle of the cathode active material is small, the electrolyte and the cathode active material tend to react with each other further easily, and this is advantageous for lowering the resistance of the cathode. Further, when the specific surface area of the conduction material used herein and the liquid retainability of the liquid electrolyte are high, since the electrolyte from the vicinity of the cathode active material is supplied to the cathode active material, this is advantageous for lowering the resistance of the cathode.

As describe above, the resistance of the cathode can be lowered by considering the particle size of the conduction material and the void volume in the cathode relative to the primary particle size, the secondary particle size of the cathode active material and the secondary particle diameter of the cathode active material, which constitute the cathode active material particle. Then, the void volume in the cathode can be evaluated by mercury intrusion porosimetry to be described later and the pore volume is preferably 0.29 cm$^3$/g or more and 0.47 cm$^3$/g or less within a pore range of 0.1 $\mu$m or more and 7 $\mu$m or less. When the pore volume is less than 0.29 cm$^3$/g, the resistance of the cathode is high. On the other hand, if it exceeds 0.47 cm$^3$/g, since the cathode mix comprising the cathode active material, the conductivity material, the binder, and the collector are liable to be separated, this decreases the battery power.

The method of evaluating the particle size, the method of evaluating the specific surface area, and the method of evaluating the pore structure in the cathode structure are to be described below.

The primary particle size, the secondary particle size, and the conduction material particle size of the cathode active material of the cathode can be evaluated by an electron microscopic observation for the cross section or the fracture section of the cathode.

Then, a measuring method for evaluating the specific surface area of the cathode active material is shown below. The material is previously dried at 120°C, filled in a specimen cell, and dried in a nitrogen gas at 300°C for 30 min. Then, the specimen cell is mounted on a measuring section and, after counting signals upon desorption with an He/N$_2$ gas mixture, the specific surface area was calculated according to the BET method.

Further, the mercury intrusion porosimetry is used as a method for evaluating pores formed in the cathode. Generally, when pores formed in the cathode are measured by the mercury intrusion porosimetry, the pore size formed in the cathode active material is evaluated. According to the mercury intrusion porosimetry, mercury is intruded from an opening and the pore size and the pore volume can be evaluated. The principle for the pore distribution measurement according to the mercury intrusion porosimetry is shown below.

When mercury is intruded into a cylindrical pore 2r, the pore radius r is determined according to the following equation (1) assuming the pressure of mercury as P, and the surface tension of mercury as $\gamma$ (0.48 N/m):

$$r = -2r\gamma\cos\theta/P \qquad\qquad (1)$$

According to the relation described above, mercury can be intruded into the pore having a diameter of about 7 nm to 400 $\mu$m under the pressure of about 3.7 kPa to 200 MPa and the pore distribution within the range can be analyzed.

Acetylene black may be contained further in the cathode of the invention. Vacancy of the hollow carbon material may be expected to provide the effect of supplying an electrolyte to the cathode active material. The hollow carbon material is a hollow carbon material such as of acetylene black and, more preferably, a hollow fibrous carbon material opened on both ends. The length of the hollow carbon material is, for example, 1 $\mu$m or more and 10 $\mu$m or less and, more preferably, 2 $\mu$m or more and 8 $\mu$m or less. The hollow fibrous carbon material preferably has a diameter, for example, of more than 10 nm and less than 300 nm, more preferably, more than 20 nm and less than 80 nm, and has a length within a range from 3 $\mu$m to 8 $\mu$m.

(Method of producing cathode material for lithium secondary battery)

To form the cathode active material of a small primary particle size, primary particles decreased in the particle diameter are necessary as the starting material, and it is necessary to control the growth of the primary particles by controlling the baking conditions for the secondary particles formed by aggregation of the primary particles. Further, as far as the crystal growth of particles is concerned, the growing rate of the primary particles differs greatly also on the cathode active material composition to be used. In particular, since a cathode active material composition represented by: $Li_aMn_xNi_yCo_zO_2$ ($0 < a \leq 1.2$, $0.1 \leq x \leq 0.9$, $0.1 \leq y \leq 0.9$, $0.1 \leq z \leq 0.34$, $x+y+z = 1$) causes less particle to grow, a cathode active material with a small primary particle diameter can be formed. For example, when the Co content is so high that the atomic ratio for Ni:Mn:Co is 3:3.5:3.5, the primary particles cause particle growing and it is sometimes difficult to manufacture a desired particle structure.

A specific method of producing the cathode material of the invention is as described below.

<Method of producing cathode material>

A cathode material can be produced by the following steps (a) to (e):

(a) Metal oxides as the starting material for the cathode active material are mixed so as to form, for example, $Mn_xNi_yCo_z$ ($0.1 \leq x \leq 0.9$, $0.1 \leq y \leq 0.9$, $0.1 \leq z \leq 0.34$, $x+y+z = 1$) and pulverized by a bead mill or the like to manufacture primary particles mainly having a particle size of more than 0.1 $\mu$m and less than 0.3 $\mu$m. They are preferably pulverized such that the primary particles with a particle size of more than 0.1 $\mu$m and less than 0.3 $\mu$m are present by 98% by volume or more of the metal oxide.
(b) A known binder for granulating a secondary particle, for example, polyvinyl alcohol (hereinafter simply referred as PVA) is added to the primary particles, and they are granulated by a spray drier or the like. After granulation, they are preferably dried gradually as described above.
(c) A lithium compound, for example, lithium hydroxide lithium carbonate, etc are added to the granulated particles, preferably, for example, such that the ratio of lithium : (nickel, cobalt, and manganese) is 1 to 1.2:1.
(d) The particle after addition of the lithium compound is baked in an atmospheric air, preferably, at 750°C or higher and 850°C or lower and, preferably, for 3 to 10 hours.
(e) The baked particles are crushed to manufacture a secondary particle. After crushing, they are preferably classified to remove coarse particles.

<Method of producing lithium ion secondary battery>

The lithium ion secondary battery of the invention may be in any of cylindrical, lamination, coin, or card type with no particular restriction and description is to be made for the method of producing a cylindrical lithium ion secondary battery as an example.

1) Method of producing cathode

A conduction material such as graphite, acetylene black, or carbon black is added to the secondary particle of the cathode active material manufactured to be mixed as described above. In the invention, the dispersion state of the small particle size conduction material to the small particle size cathode active material is important for lowering the electrode resistance. Further, the cathode active material used in the invention has a high specific surface area and high liquid absorption for an organic solvent used upon manufacture of the electrode. Accordingly, after previously mixing N-methyl-2-pyrrolidinone (hereinafter simply referred to as NMP) as an organic solvent with a cathode active material to absorb NMP to the cathode active material, the conduction material is dispersed in the cathode active material. Then, a binder such as polyvinylidene fluoride (hereinafter simply referred to as PVDF) dissolved in a solvent such as NMP is added and kneaded to the mixture to obtain a cathode slurry. Then, after coating the slurry on an aluminum metal foil, it is dried to manufacture a cathode plate.

2) Method of producing anode

A conduction material such as acetylene black and carbon fibers is added to an amorphous carbon material as the anode active material to be mixed. After adding PVDF or rubbery binder (SBR, etc.) dissolved in NMP as a binder, they are kneaded to obtain an anode slurry. Then, after coating the slurry on a copper foil, they are dried to manufacture an anode plate.

3) Method of manufacturing battery

For the cathode and the anode plates, the slurry is coated on both surfaces of the electrodes and then dried. Further, they are densified by pressing and each cut into a predetermined shape to manufacture electrodes. Then, lead pieces for supplying current to the electrodes are formed. A separator made of a porous insulation material is put between the cathode and the anode and, after winding them, they are inserted into a battery casing molded from stainless steel or aluminum. Then, after connecting the lead pieces and the battery casing, a non-aqueous liquid electrolyte is injected and, finally, the battery casing is sealed to obtain a lithium ion secondary battery.

4) Battery modulization

The mode of using the lithium ion secondary battery described above includes a lithium ion battery module in which a plurality of batteries are connected in series. In the battery module using the lithium ion secondary battery of the invention, power can be increased.

The present invention is to be described by way of examples, but the invention is not restricted by the examples.

[Example 5]

<Manufacture of secondary particle of cathode active material>

Manganese dioxide, cobalt oxide, and nickel oxide were used as the starting material and, after weighing such that the Ni:Mn:Co ratio was at 3:3.5:3.5 by atomic ratio, pure water was added to form a slurry. The slurry was pulverized by a zirconia bead mill until the average particle size was 0.1 $\mu$m to prepare primary particles. A PVA solution was added by 1.1 wt% based on the solid ratio to the slurry, mixed for further one hour, and granulated and dried by a spray drier to prepare particles of 3 to 20 $\mu$m. Lithium hydroxide and lithium carbonate were added to the granulated particles such that the Li:(NiMnCo) ratio was at 1.05:1. Then, the particles were baked at 850°C for 3 to 10 hours to form crystals of a layered structure, and particles subsequently crushed and removed with coarse particles with a particle size of 6 $\mu$m or more by classification were used as secondary particle (A) for the manufacture of an electrode.

<Method of measuring particle size of cathode active material>

As a result of measurement of the average secondary particle size for the secondary particles (A) by a laser diffraction type size distribution analyzer, the median diameter was 5 $\mu$m. Further, as a result of observation of the particles by an electron microscope under a view field of 1000X, the secondary particle size was 3 to 6 $\mu$m for 90% of the entire view field. Further, as a result of observation of the particles by an electron microscope under a view field of 6000X, the average primary particle size was 0.2 $\mu$m.

<Measuring method for specific surface area>

The secondary particles (A) were previously dried at 120°C, filled in a specimen cell, and dried in a nitrogen gas at 300°C for 30 min. Then, the specimen cell was mounted on a measuring section and, after counting signals upon desorption with an He/N$_2$ gas mixture, the specific surface area was calculated according to the BET method. As a result, the specific surface area of the secondary particle was 1.4 m$^2$/g.

<Evaluation for pore distribution>

A cathode plate was manufactured by the following procedures using the secondary particle (A) described above. A solution in which PVDF as a binder was previously dissolved in NMP as a solvent, the secondary particles (A) and a carbonaceous conduction material with an average particle size of 4 $\mu$m were mixed by the method described above to manufacture a cathode mix slurry. In this case, they were mixed such that the secondary particle (A), the carbonaceous conduction material, and the binder were at a ratio of 85:10.7:4.3 respectively as represented by weight percent. After the slurry was uniformly coated on an aluminum sheet of 20 $\mu$m thickness, it was dried at 100°C and pressurized at 1.5 ton/cm$^2$ by pressing to form a coating layer of about 100 $\mu$m thickness and obtain a cathode plate 17.

Then, the cathode plate was cut out into 2 cm square and measurement was conducted for the pore size distribution by mercury intrusion porosimetry by using a Pore Sizer 9320 manufactured by Micromeritics Co. As a result, the pore size distribution volume of 0.1 $\mu$m or more and 7 $\mu$m or less was 0.42 cm$^3$/g.

<Evaluation for cylindrical battery>

To manufacture a cylindrical battery, a cathode plate 7 using the secondary particles (A) was cut to a coating width of 5.4 cm and a coating length of 50 cm, and a lead pieces made of an aluminum foil were welded for taking out a current to manufacture a cathode plate.

Then, an anode plate was manufactured for manufacturing a cylindrical battery in combination with the cathode plate. An anode mix slurry was manufactured by dissolving and mixing an amorphous carbon material of an anode active material in NMP as a binder. In this case, the amorphous carbon material and the binder were defined at 92:8 by dried weight ratio. The slurry was uniformly coated on a rolled copper foil of 10 $\mu$m. Then, it was shaped under compression by a roll press and cut to a coating width of 5.6 cm and a coating length of 54 cm, to which lead pieces made of a copper foil were welded to manufacture an anode plate.

A cylindrical battery schematically shown in Fig. 4 was manufactured by the following procedures using the cathode plate and the anode plate manufactured as described above. First, an electrode group was manufactured by interposing a separator 19 between the cathode plate 17 and the anode plate 18 such that they were not in direct contact with each other and winding them. In this case, the lead piece 113 for the cathode plate and the lead piece 111 for the anode plate situate on both end faces of the electrode group on the side opposite to each other. Further, in the arrangement for the cathode plate 17 and the anode plate 18, the cathode mix coated area was defined so as not to extend beyond the anode mix coated area. Further, the separator 19 used herein was a finely porous polypropylene film of 25 $\mu$m thickness and 5.8 cm width. Then, the electrode group was inserted into a battery casing 110 made of SUS, the anode lead piece 111 was welded to the bottom of the casing, and a cathode lead piece 113 was welded to a sealing lid portion 112 that functioned also as a cathode current terminal. After injecting a non-aqueous liquid electrolyte (LiPF$_6$ dissolved at 1.0 mol/L to a solvent mixture of ethylene carbonate (EC) and dimethyl carbonate (DMC)) at 1:2 volumic ratio) to a battery casing 110 in which the electrode group was arranged, they were tightly sealed by caulking a sealing lid 112 attached with a packing 115 to the battery casing 110 to manufacture a cylindrical battery of 18 mm diameter and 65 mm length. In this case, the sealing lid 112 has a bursting valve that is burst when the pressure in the battery increases to relieve the pressure inside of the battery, and an insulation plate 114 is disposed between the sealing lid 112 and the electrode group.

The small cylindrical battery was initialized by repeating charge and discharge three times to an upper limit voltage of 4.2 V and a lower limit voltage of 2.7 V at 0.3C. Further, charge and discharge at an upper limit voltage of 4.2 V and a lower limit voltage of 2.7 V at 0.3C equivalent were conducted to measure the battery discharge capacitance. Then, after applying constant current and constant voltage charging at an upper voltage of 4.2 V for 5 hours at 0.3C equivalent, constant current discharge to the lower limit voltage 2.7 V at 1C equivalent was conducted, and an open circuit voltage before discharge and a voltage after 10 sec discharge were measured to determine a voltage drop ($\Delta$V) as the difference between them. Further, the discharge current was changed to 3C equivalent, 6C equivalent and identical charge and discharge were conducted to measure the voltage drop at each discharge current (I). The discharge current (I) and the voltage drop ($\Delta$V) were plotted to calculate the cell resistance based on the slant. Then, the battery power was determined based on the open circuit voltage and the battery resistance at a battery charged state of 50%.

The test battery powers of cylindrical batteries using the secondary particle (A) are shown in the column for Example 5 of Table 2.

Table 2

| Example | Comparative Example | Composition ratio (Atomic ratio%) | | | Primary particle size ($\mu$m) | Secondary particle size ($\mu$m) | Conductive material particle size ($\mu$m) | Pore volume (cm$^2$/g) | Battery power (W/kg) |
|---|---|---|---|---|---|---|---|---|---|
| | | Ni | Mn | Co | | | | | |
| Example 5 | | 3.5 | 3.5 | 3 | 0.2 | 5 | 4 | 0.42 | 3400 |
| | Comparative Example 6 | 3 | 3 | 4 | 0.5 | 5 | 4 | 0.27 | 2810 |
| | Comparative Example 7 | 3.5 | 3.5 | 3 | 0.2 | 7 | 4 | 0.273 | 2900 |
| | Comparative Example 8 | 3.5 | 3.5 | 3 | 0.2 | 2 | 4 | 0.5 | 2700 |
| | Comparative Example 9 | 3.5 | 3.5 | 3 | 0.2 | 5 | 7 | 0.41 | 2940 |
| | Comparative Example 10 | 3.5 | 3.5 | 3 | 0.2 | 5 | 2 | 0.5 | 2800 |
| Example 6 | | 3.5 | 3.5 | 3 | 0.2 | 5 | 6 | 0.415 | 3100 |

(continued)

| Example | Comparative Example | Composition ratio (Atomic ratio%) | | | Primary particle size (μm) | Secondary particle size (μm) | Conductive material particle size (μm) | Pore volume (cm²/g) | Battery power (W/kg) |
|---|---|---|---|---|---|---|---|---|---|
| | | Ni | Mn | Co | | | | | |
| Example 7 | | 3.5 | 3.5 | 3 | 0.2 | 5 | 4 | 0.425 | 3430 |

The power of the battery using the cathode plate of Example 5 was 3400 W/kg. As described above, in the cylindrical battery using the cathode plate of Example 5, the high battery power could be attained.

Then, the batteries were connected in series by the number of 10 and a battery module with increased power could be obtained.

[Comparative Example 6]

Manganese dioxide, cobalt oxide, and nickel oxide were used as the starting material and, after weighing such that they were at the Ni:Mn:Co ratio of 3:3:4 by atomic ratio, pure water was added to form a slurry. The slurry was pulverized by a zirconia bead mill until the average particle size was 0.1 μm to manufacture primary particles. A PVA solution was added by 1.1 wt% based on the solid ratio to the slurry, mixed for further one hour, and granulated and dried by a spray drier to manufacture particles of 3 to 20 μm. Lithium hydroxide and lithium carbonate were added to the granulated particles such that the Li:(NiMnCo) ratio was 1.05:1. Then, the particles were baked at 850°C for 3 to 10 hours to form crystals of a layered structure, and then particles subsequently crushed and removed with coarse particles with a particle size of 6 μm or more by classification were used as secondary particles (B) for the manufacture of an electrode.

<Method of measuring particle size of cathode active material>

As a result of measurement of the average secondary particle size for the secondary particles (B) by a laser diffraction type size distribution analyzer, the median diameter was 5 μm. Further, as a result of observation of the particles by an electron microscope under a view field of 1000X, the secondary particle size was 3 to 6 μm for 90% of the entire view field. Further, as a result of observation of the particles by an electron microscope under a view field of 6000X, the average primary particle size was 0.5 μm.

<Measuring method for specific surface area>

As a result of measurement of the specific surface area of the secondary particle (B) by the method disclosed in Example 5, the specific surface area of the secondary particle was 1.0 m²/g.

<Evaluation for pore distribution>

A cathode plate was manufactured by the following procedures using the secondary particle (B) described above. A solution in which PVDF as a binder was previously dissolved in NMP as a solvent, the secondary particles (B) and a carbonaceous conduction material with an average particle size of 4 μm were mixed by the method described above to manufacture a cathode mix slurry. In this case, they were mixed such that the secondary particle (B), the carbonaceous conduction material, and the binder were at a ratio of 85:10.7:4.3 respectively as represented by weight percent. After the slurry was uniformly coated on an aluminum sheet of 20 μm thickness, it was dried at 100°C and pressurized at 1.5 ton/cm² by pressing to form a coating layer of about 100 μm thickness and obtain a cathode plate.

As a result of measurement of the pore size volume of the cathode plate by the pore size evaluation method disclosed in Example 5, the fine pore size distribution volume of 0.1 μm or more and 7 μm or less was 0.27 cm³/g.

<Evaluation for cylindrical battery>

To manufacture a cylindrical battery, the cathode plate using the secondary particle (B) was cut to a coating width of 5.4 cm and a coating length of 50 cm, and lead pieces made of an aluminum foil for taking out a current were welded to manufacture a cathode plate.

Then, after the anode was manufactured by the method disclosed in Example 5, it was combined with the cathode plate to manufacture a cylindrical battery by the same method as in Example 5.

The battery power of the small cylindrical battery was determined by the method disclosed in Example 5. The battery power of the cylindrical battery using the secondary particle (B) is shown in the column for Comparative Example 6 in Table 2.

The power of the battery using the cathode plate of Comparative Example 6 was 2810 W/kg. As described above, in the cylindrical battery using the cathode plate of Comparative Example 6, high power could not be attained.

[Comparative Example 7]

Manganese dioxide, cobalt oxide, and nickel oxide were used as the starting material and, after weighing such that they were at the Ni:Mn:Co ratio of 3.5:3.5:3 by atomic ratio and pure water was added to form a slurry. The slurry was pulverized by a zirconia bead mill until the average particle size was 0.1 $\mu$m to manufacture primary particles. A PVA solution was added by 1.1 wt% based on the solid ratio to the slurry, mixed for further one hour, and granulated and dried by a spray drier to manufacture particles of 3 to 30 $\mu$m. Lithium hydroxide and lithium carbonate were added to the granulated particles such that the Li:(NiMnCo) ratio was 1.05:1. Then, the particles were baked at 850°C for 3 to 10 hours to form crystals of a layered structure, and then particles subsequently crushed and removed with coarse particles with a particle size of 8 $\mu$m or more by classification were used as secondary particles (C) for the manufacture of an electrode.

<Method of measuring particle size of cathode active material>

As a result of measurement of the average secondary particle size for the secondary particles (C) by a laser diffraction type size distribution analyzer, the median diameter was 7 $\mu$m. Further, as a result of observation of the particles by an electron microscope under a view field of 1000X, the secondary particle size was 4 to 7 $\mu$m for 90% of the entire view field. Further, as a result of observation of the particles by an electron microscope under a view field of 6000X, the average primary particle size was 0.2 $\mu$m.

<Measuring method for specific surface area>

As a result of measurement of the specific surface area of the secondary particle (C) by the method disclosed in Example 5, the specific surface area of the secondary particle was 0.9 $m^2$/g.

<Evaluation for pore distribution>

A cathode plate was manufactured by the following procedures using the secondary particle (C) described above. A solution in which PVDF as a binder was previously dissolved in NMP as a solvent, the secondary particles (C) and a carbonaceous conduction material with an average particle size of 4 $\mu$m were mixed by the method described above to manufacture a cathode mix slurry. In this case, they were mixed such that the secondary particle (C), the carbonaceous conduction material, and the binder were at a ratio of 85:10.7:4.3 respectively as represented by weight percent. After the slurry was uniformly coated on an aluminum sheet of 20 $\mu$m thickness, it was dried at 100°C and pressurized at 1.5 ton/$cm^2$ by pressing to form a coating layer of about 100 $\mu$m thickness and obtain a cathode plate.

As a result of measurement of the pore size volume of the cathode plate by the pore size evaluation method disclosed in Example 5, the fine pore size distribution volume of 0.1 $\mu$m or more and 7 $\mu$m or less was 0.273 $cm^3$/g.

<Evaluation for cylindrical battery>

To manufacture a cylindrical battery, the cathode plate 3 using the secondary particle (C) was cut to a coating width of 5.4 cm and a coating length of 50 cm, and lead pieces made of an aluminum foil for taking out a current were welded to manufacture a cathode plate.

Then, after the anode was manufactured by the method disclosed in Example 5, it was combined with the cathode plate to manufacture a cylindrical battery by the same method as in Example 5.

The battery power of the small cylindrical battery was determined by the method disclosed in Example 1. The battery power of the cylindrical battery using the secondary particle (C) is shown in the column for Comparative Example 7 in Table 2.

The power of the battery using the cathode plate of Comparative Example 7 was 2900 W/kg. As described above, in the cylindrical battery using the cathode plate of Comparative Example 7, the high battery power could not be attained.

[Comparative Example 8]

Manganese dioxide, cobalt oxide, and nickel oxide were used as the starting material and, after weighing such that they were at the Ni:Mn:Co ratio of 3.5:3.5:3 by atomic ratio, and pure water was added to form a slurry. The slurry was pulverized by a zirconia bead mill until the average particle size was 0.1 μm to manufacture primary particles. A PVA solution was added by 1.1 wt% based on the solid ratio to the slurry, mixed for further one hour, and granulated and dried by a spray drier to manufacture particles of 3 to 10 μm. Lithium hydroxide and lithium carbonate were added to the granulated particles such that the Li:(NiMnCo) ratio was 1.05:1. Then, the particles were baked at 850°C for 3 to 10 hours to form crystals of a layered structure, and then particles subsequently crushed and removed with coarse particles with a particle size of 3 μm or more by classification were used as secondary particles (D) for the manufacture of an electrode.

<Method of measuring particle size of cathode active material>

As a result of measurement of the average secondary particle size for the secondary particles (D) by a laser diffraction type size distribution analyzer, the median diameter was 2 μm. Further, as a result of observation of the particles by an electron microscope under a view field of 1000X, the secondary particle size was 1 to 3 μm for 90% of the entire view field. Further, as a result of observation of the particles by an electron microscope under a view field of 6000X, the average primary particle size was 0.2 μm.

<Measuring method for specific surface area>

As a result of measurement of the specific surface area of the secondary particle (D) by the method disclosed in Example 5, the specific surface area of the secondary particle was 1.7 $m^2/g$.

<Evaluation for pore distribution>

A cathode plate was manufactured by the following procedures using the secondary particle (D) described above. A solution in which PVDF as a binder was previously dissolved in NMP as a solvent, the secondary particles (D) and a carbonaceous conduction material with an average particle size of 4 μm were mixed by the method described above to manufacture a cathode mix slurry. In this case, they were mixed such that the secondary particle (D), the carbonaceous conduction material, and the binder were at a ratio of 85:10.7:4.3 respectively as represented by weight percent. After the slurry was uniformly coated on an aluminum sheet of 20 μm thickness, it was dried at 100°C and pressurized at 1.5 ton/$cm^2$ by pressing to form a coating layer of about 100 μm thickness and obtain a cathode plate.

As a result of measurement of the pore size volume of the cathode plate by the pore size evaluation method disclosed in Example 5, the fine pore size distribution volume of 0.1 μm or more and 7 μm or less was 0.5 $cm^3/g$.

<Evaluation for cylindrical battery>

To manufacture a cylindrical battery, the cathode plate 4 using the secondary particle (D) was cut to a coating width of 5.4 cm and a coating length of 50 cm, and lead pieces made of an aluminum foil for taking out a current were welded to prepare a cathode plate.

Then, after the anode was prepared by the method disclosed in Example 5, it was combined with the cathode plate to manufacture a cylindrical battery by the same method as in Example 5.

The battery power of the small cylindrical battery was determined by the method disclosed in Example 5. The battery power of the cylindrical battery using the secondary particle (D) is shown in the column for Comparative Example 8 in Table 2.

The power of the battery using the cathode plate of Comparative Example 8 was 2700 W/kg. As described above, in the cylindrical battery using the cathode plate of Comparative Example 8, high battery power could not be attained.

[Comparative Example 9]

<Evaluation for pore distribution>

A cathode plate was manufactured by the following procedures using the secondary particle (A) used in Example 5 as the cathode active material. A solution in which PVDF as a binder was previously dissolved in NMP as a solvent, the secondary particles (A) and a carbonaceous conduction material with an average particle size of 7 μm were mixed

by the method described above to manufacture a cathode mix slurry. In this case, they were mixed such that the secondary particle (A), the carbonaceous conduction material, and the binder were at a ratio of 85:10.7:4.3 respectively as represented by weight percent. After the slurry was uniformly coated on an aluminum sheet of 20 $\mu$m thickness, it was dried at 100°C and pressurized at 1.5 ton/cm$^2$ by pressing to form a coating layer of about 100 $\mu$m thickness and obtain a cathode plate.

As a result of measurement of the pore size volume of the cathode plate by the pore size evaluation method disclosed in Example 5, the fine pore size distribution volume of 0.1 $\mu$m or more and 7 $\mu$m or less was 0.41 cm$^3$/g.

<Evaluation for cylindrical battery>

To manufacture a cylindrical battery, the cathode plate using the secondary particle (A) was cut to a coating width of 5.4 cm and a coating length of 50 cm, and lead pieces made of an aluminum foil for taking out a current were welded to manufacture a cathode plate.

Then, after the anode was prepared by the method disclosed in Example 5, it was combined with the cathode plate to manufacture a cylindrical battery by the same method as in Example 5.

The battery power of the small cylindrical battery was determined by the method disclosed in Example 5. The test battery power of the cylindrical battery using the secondary particle (A) is shown in the column for Comparative Example 9 in Table 2.

The power of the battery using the cathode plate of Comparative Example 9 was 2940 W/kg. As described above, in the cylindrical battery using the cathode plate of Comparative Example 9, the high battery power could not be attained.

[Comparative Example 10]

<Evaluation for pore distribution>

A cathode plate was manufactured by the following procedures using the secondary particle (A) used in Example 5 as the cathode active material. A solution in which PVDF as a binder was previously dissolved in NMP as a solvent, the secondary particles (A) and a carbonaceous conduction material with an average particle size of 2 $\mu$m were mixed by the method described above to manufacture a cathode mix slurry. In this case, they were mixed such that the secondary particle (A), the carbonaceous conduction material, and the binder were at a ratio of 85:10.7:4.3 respectively as represented by weight percent. After the slurry was uniformly coated on an aluminum sheet of 20 $\mu$m thickness, it was dried at 100°C and pressurized at 1.5 ton/cm$^2$ by pressing to form a coating layer of about 100 $\mu$m thickness and obtain a cathode plate.

As a result of measurement of the pore size volume of the cathode plate by the pore size evaluation method disclosed in Example 5, the fine pore size distribution volume of 0.1 $\mu$m or more and 7 $\mu$m or less was 0.5 cm$^3$/g.

<Evaluation for cylindrical battery>

To manufacture a cylindrical battery, the cathode plate using the secondary particle (A) was cut to a coating width of 5.4 cm and a coating length of 50 cm, and lead pieces made of an aluminum foil for taking out a current were welded to manufacture a cathode plate.

Then, after the anode was prepared by the method disclosed in Example 5, it was combined with the cathode plate to manufacture a cylindrical battery by the same method as in Example 5.

The battery power of the small cylindrical battery was determined by the method disclosed in Example 5. The test battery power of the cylindrical battery using the secondary particle (A) is shown in the column for Comparative Example 10 in Table 2.

The power of the battery using the cathode plate of Comparative Example 10 was 2800 W/kg. As described above, in the cylindrical battery using the cathode plate of Comparative Example 10, high battery power could not be attained.

[Example 6]

<Evaluation for pore distribution>

A cathode plate was manufactured by the following procedures using the secondary particle (A) used in Example 5 as the cathode active material. A solution in which PVDF as a binder was previously dissolved in NMP as a solvent, the secondary particles (A) and a carbonaceous conduction material with an average particle size of 6 $\mu$m were mixed

by the method described above to manufacture a cathode mix slurry. In this case, they were mixed such that the secondary particle (A), the carbonaceous conduction material, and the binder were at a ratio of 85:10.7:4.3 respectively as represented by weight percent. After the slurry was uniformly coated on an aluminum sheet of 20 $\mu$m thickness, it was dried at 100°C and pressurized at 1.5 ton/cm$^2$ by a press to form a coating layer of about 100 $\mu$m thickness and obtain a cathode plate.

As a result of measurement of the pore size volume of the cathode plate by the pore size evaluation method disclosed in Example 5, the fine pore size distribution volume of 0.1 $\mu$m or more and 7 $\mu$m or less was 0.415 cm$^3$/g.

<Evaluation for cylindrical battery>

To manufacture a cylindrical battery, the cathode plate using the secondary particle (A) was cut to a coating width of 5.4 cm and a coating length of 50 cm, and lead pieces made of an aluminum foil for taking out a current were welded to manufacture a cathode plate.

After the anode was prepared by the method disclosed in Example 5, it was combined with the cathode plate to manufacture cylindrical battery by the same method as in Example 5.

The battery power of the small cylindrical battery was determined by the method disclosed in Example 5. The test battery power of the cylindrical battery using the secondary particle (A) is shown in the column for Comparative Example 10 in Table 2.

The power of the battery using the cathode plate of Example 6 was 3100 W/kg. As described above, in the cylindrical battery using the cathode plate of Example 6, the high battery power could be attained.

Then, the batteries were connected in series by the number of 10 and a battery module with increased power could be obtained.

[Example 7]

<Evaluation for pore distribution>

A cathode plate was manufactured by the following procedures using the secondary particle (A) used in Example 5 as the cathode active material. A solution in which PVDF as a binder was previously dissolved in NMP as a solvent, the secondary particles (A), a carbonaceous conduction material with an average particle size of 4 $\mu$m and an acetylene black with a grain size of 70 to 110 nm were mixed by the method described above to manufacture a cathode mix slurry. In this case, they were mixed such that the secondary particle (A), the carbonaceous conduction material, and the binder were at a ratio of 85:10.7:4.3 respectively as represented by weight percent. After the slurry was uniformly coated on an aluminum sheet of 20 $\mu$m thickness, it was dried at 100°C and pressurized at 1.5 ton/cm$^2$ by a press to form a coating layer of about 100 $\mu$m thickness and obtain a cathode plate.

As a result of measurement of the pore size volume of the cathode plate by the pore size evaluation method disclosed in Example 5, the fine pore size distribution volume of 0.1 $\mu$m or more and 7 $\mu$m or less was 0.425 cm$^3$/g.

<Evaluation for cylindrical battery>

To manufacture a cylindrical battery, the cathode plate using the secondary particle (A) was cut to a coating width of 5.4 cm and a coating length of 50 cm, and lead pieces made of an aluminum foil for taking out a current were welded to manufacture a cathode plate.

After the anode was prepared by the method disclosed in Example 5, it was combined with the cathode plate to manufacture a cylindrical battery by the same method as in Example 5.

The battery power of the small cylindrical battery was determined by the method disclosed in Example 5. The test battery power of the cylindrical battery using the secondary particle (A) is shown in the column for Comparative Example 7 in Table 2.

The power of the battery using the cathode plate of Example 7 was 3430 W/kg. As described above, in the cylindrical battery using the cathode plate of Example 7, the high battery power could be attained.

Then, the batteries were connected in series by the number of 10 and a battery module with increased power could be obtained.

While the invention has been described in its preferred embodiments, it is to be understood that the words which have been used are words of description rather than limitation and that changes within the purview of the appended claims may be made without departing from the true scope and spirit of the invention in its broader aspects.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

**Claims**

1.  A cathode material for a lithium secondary battery in which a primary particle (1) constituting a secondary particle (2) of a cathode active material comprises a particle mainly having a particle size of more than 0.1 $\mu$m and less than 0.5 $\mu$m, the specific surface area of the secondary particle is 1.1 m$^2$/g or more and 1.6 m$^2$/g or less, and the narrowest diameter for through pores (5) of the secondary particle (2) as measured by Perm Porometry is more than 0.1 $\mu$m and less than 0.3 $\mu$m.

2.  The cathode material according to claim 1, wherein the ratio of through pore distribution within a range more than 0.1 $\mu$m and less than 0.3 $\mu$m described above present in the through pore distribution of 1 $\mu$m or less is more than 3%.

3.  The cathode material according to claim 1 or 2, wherein the cathode active material is a layered composite oxide represented by the chemical formula: $Li_aMri_xNi_yCo_zO_2$ ($0 < a \leq 1.2$, $0.1 \leq x \leq 0, 9$, $0.1 \leq y \leq 0.9$, $0.1 \leq z \leq 0.34$, and $x+y+z = 1$).

4.  A cathode material according to at least one of the claims 1 - 3, wherein a hollow carbon material is further contained.

5.  A method of manufacturing a cathode material for a lithium secondary battery according to any of claims 1 - 4, including the steps of:

    (a) mixing and pulverizing metal oxides as a starting material for a cathode active material, thereby manufacturing primary particles (1) mainly having a particle size of more than 0.1 $\mu$m and less than 0.5 $\mu$m,
    (b) adding a binder to the primary particles (1) and granulating them,
    (c) adding a lithium compound to the granulated particles,
    (d) baking the particles after addition of the lithium compound in an atmospheric air at 850°C or lower, and
    (e) crushing the baked particles thereby preparing a secondary particle (2).

6.  The method according to claim 5 further includes the step of, in the step (a), conducting pulverization such that the primary particles (1) with a particle size of more than 0.1 $\mu$m and less than 0.5 $\mu$m are 98% by volume or more based on the metal oxide and/or in the step (b), adding a hollow carbon material together with the binder.

7.  A method of manufacturing a cathode material for a lithium secondary battery according to any of claims 1 - 4, including the steps of:

    (a) adding a solution of a hydroxide to a solution of a metal salt as the starting material for a cathode active material and manufacturing a particle in which primary particles of a composite metal hydroxide are aggregated by a coprecipitation method,
    (b) adding a lithium compound to the particle in which the primary particles (1) are aggregated.
    (c) baking the particles after addition of the lithium compound in an atmospheric air at 850°C or lower, and
    (d) crushing the baked particles, thereby manufacturing secondary particles (2).

8.  The method according to claim 7 further includes the step of, in the step (a), manufacturing particles containing 98 vol% or more of primary particles (1) with the particle size of more than 0.1 $\mu$m and less than 0.5 $\mu$m by a coprecipitation method and/or in the step (a), adding a hollow carbon material and a binder and granulating particles in which the primary particles (1) are aggregated.

9.  A cathode for use in a lithium secondary battery comprising a cathode active material having a secondary particle (2) size of 3 $\mu$m or more and 6 $\mu$m or less in which primary particles (1) of 0.1 $\mu$m or more and less than 0.3 $\mu$m are aggregated and a lumpy conduction material with a particle size of 6 $\mu$m or less.

10. The cathode according to claim 9, wherein the pore volume of the cathode within a range of the pore diameter of 0.1 or more and 7 $\mu$m or less as measured by mercury intrusion porosimetry is 0.29 cm$^3$/g or more and less than 0.47 cm$^3$/g, and/or the specific surface area of the cathode active material is 1.1 m$^2$/g or more and less than 1.5 m$^2$/g.

11. A lithium ion secondary battery using the cathode material according to any of claims 1 to 4 and/or the cathode according to claim 9 or 10.

12. A battery module in which a plurality of lithium ion secondary batteries according to claim 11 are electrically connected.

13. A lithium secondary battery in which a cathode for occluding and releasing lithium and an anode for occluding and releasing lithium are formed by way of a liquid electrolyte, wherein
the cathode contains a cathode active material and a conductive material,
the cathode active material is a layered composite oxide having a secondary particle (2) size of 3 $\mu$m or more and 6 $\mu$m or less in which primary particles (1) of 0.1 $\mu$m or more and less than 0.3 $\mu$m are aggregated, and
the layered composite oxide is represented by the chemical formula:

$$Li_aMn_xNi_yCo_zO_2$$

(0 < a ≤ 1.2, 0.1 ≤ x ≤ 0.9, 0.1 ≤ y ≤ 0.9, 0.1 ≤ z ≤ 0.34, and x+y+z = 1).
the particle size of the conductive material is 6 $\mu$m or less, and
the specific surface area of the cathode active material is 1.1 m$^2$/g or more and less than 1.5 m$^2$/g.

14. A lithium secondary battery in which a cathode occluding and releasing lithium and an anode occluding and releasing lithium are formed by way of a liquid electrolyte, wherein
the cathode contains a cathode active material and a conduction material,
the cathode active material is a layered composite oxide having a secondary particle (2) size of 3 $\mu$m or more and 6 $\mu$m or less in which primary particles (1) of 0.1 $\mu$m or more and less than 0.3 $\mu$m are aggregated, and
the pore volume of the cathode within a range of the pore diameter of 0.1 or more and 7 $\mu$m or less as measured by mercury intrusion porosimetry is 0.29 cm$^3$/g or more and less than 0.47 cm$^3$/g.

15. The lithium secondary battery according to claim 21, wherein the conduction material is acetylene black and/or a hollow carbon material with a diameter of 20 nm or more and less than 80 nm, and with a length of 3 $\mu$m or more and 8 $\mu$m or less.

FIG. 1

# FIG. 2

# FIG. 3

# FIG. 4

## FIG. 5

## FIG. 6

# FIG. 7

**REFERENCES CITED IN THE DESCRIPTION**

**Patent documents cited in the description**

- JP 2000323123 A
- JP 2005158401 A
- JP 2005123179 A
- JP 2005141983 A
- JP 2002104827 A
- JP 2005251684 A